# EUROPÄISCHE PATENTSCHRIFT

(11) **EP 3 715 293 B1**
(45) Veröffentlichungstag und Bekanntmachung des Hinweises auf die Patenterteilung: **02.03.2022**
(21) Anmeldenummer: 20154229.7
(22) Anmeldetag: 29.01.2020
(51) Int. Cl.: B65H 20/16, B65H 19/10

(54) **MATERIALBAHN-EINZUGSVORRICHTUNG**
MATERIAL SHEET RETRACTION DEVICE
DISPOSITIF DE RÉTRACTION DE BANDE DE MATIÈRE

(30) Priorität: 07.02.2019 DE 102019201592; 19.03.2019 DE 102019203742
(43) Veröffentlichungstag der Anmeldung: 30.09.2020
(73) Patentinhaber: BHS Corrugated Maschinen- und Anlagenbau GmbH, 92729 Weiherhammer (DE)
(72) Erfinder: Ruhland, Karl, 92536 Pfreimd (DE); Gnan, Alfons, 92249 Vilseck (DE); Städele, Norbert, 92711 Parkstein (DE)
(74) Vertreter: Rau, Schneck & Hübner Patentanwälte Rechtsanwälte PartGmbB

(56) Entgegenhaltungen:
- EP-A1- 1 645 534
- EP-A1- 1 752 402
- EP-A1- 1 752 403
- EP-A1- 3 459 884
- EP-A2- 0 274 088
- EP-A2- 0 349 350
- JP-A- H10 139 228
- US-A1- 2018 257 403
- US-A1- 2018 362 281

## Beschreibung

Die Erfindung richtet sich auf eine Materialbahn-Be-/Verarbeitungsanordnung, insbesondere Materialbahn-Abgabeanordnung, insbesondere Materialbahn-Abrollanordnung, insbesondere Materialbahn-Spliceanordnung, mit mindestens einer Materialbahn-Einzugsvorrichtung gemäß dem Oberbegriff des Anspruchs 1.

Aus dem Stand der Technik ist es durch offenkundige Vorbenutzung bekannt, Materialbahnen in Be-/Verarbeitungsanordnungen einzuführen. Dies erfolgt im Allgemeinen manuell bzw. händisch. Ferner lehrt der Stand der Technik die manuelle bzw. händische Entfernung von Trennabdeckungen von beidseitig klebenden Klebestücken, die an Materialbahnen angebracht sind, um diese miteinander zu verbinden. Oftmals ist dies mit einem nicht unerheblichen Zeitaufwand verbunden und wird häufig nicht besonders sorgfältig durchgeführt.

Die gattungsgemäße EP 1 645 534 A1 offenbart ein Verfahren zum Einführen einer Materialbahn in eine Rollenwickeleinrichtung, bei dem ein Anfang der Materialbahn mittels einer Hilfseinrichtung von einer Vorratsrolle abgezogen wird. Die Hilfseinrichtung ist vorzugsweise auf zwei Bewegungsbahnen geführt, die beispielsweise durch Schienen oder Führung gebildet sind. Vorzugsweise ist eine Transporteinrichtung entlang mindestens einer Bewegungsbahn geführt. Die Transporteinrichtung kann beispielsweise als Kette, Riemen oder Seil ausgebildet sein und die Hilfseinrichtung entlang der Bewegungsbahnen ziehen. Vorzugsweise weist die Hilfseinrichtung Saugöffnungen und/oder Klemmmittel auf. Beides dient dazu, den Anfang der Materialbahn festzuhalten. Dieses bekannte Verfahren ist nicht sonderlich flexibel. Es ist außerdem störungsanfällig.

Die EP 1 752 403 A1 offenbart eine Vorrichtung zum Führen einer Bahn von einer ersten Position zu einer zweiten Position, insbesondere von einer Abwickelposition zu einem Wickelabschnitt einer Rollenwickeleinrichtung, mit einer Hilfseinrichtung. Die Hilfseinrichtung umfasst ein erstes Haltemittel, das sich quer zur Längserstreckung der Bahn erstreckt und beidseits dieser in jeweils einem Träger gehalten ist. An mindestens einem Träger ist ein zweites Halteelement befestigt, das in einem Aufnahmezustand einen Abstand zu dem ersten Halteelement aufweist. Die beiden Halteelemente werden durch die eingefädelte Bahn so gegeneinander gedrückt, dass sie diese zwischen sich einklemmen. Die Träger mit den dazwischen befindlichen Halteelementen können durch ein Führungssystem von der ersten Position zur zweiten Position bewegt werden, und zwar entlang eines vorgegebenen Pfades. Die Hilfseinrichtung hat einen Antrieb.

Die EP 1 752 402 A1 offenbart eine Vorrichtung zum Führen einer Bahn von einer ersten zu einer zweiten Position, insbesondere von einer Abwickelstation zu einem Wickelabschnitt einer Rollenwickeleinrichtung, mit einer Hilfseinrichtung. Die Hilfseinrichtung hat ein Rohr, das einen mit Unterdruck beaufschlagbaren Innenraum umschließt. An der Außenfläche des Rohrs ist die Bahn festsaugbar. Das Rohr ist vorzugsweise an beiden Enden in jeweils einem Träger gehalten.

Aus der US 2018/0257403 A1 ist eine Druckanordnung bekannt, die imstande ist, eine abgezogene Bahn zu bedrucken. Die Bahn wird entlang einer Förderbahn abgezogen.

Aus der JP H10-139228 A ist eine Papier-Zuführanordnung bekannt, die Papier von einer Papierrolle abzieht und das Papier zu einer Druckanordnung in einer Transaktionsvorrichtung führt.

Der vorliegenden Erfindung liegt daher die Aufgabe zugrunde, die Probleme des Stands der Technik zu beseitigen. Insbesondere soll eine Materialbahn-Be-/Verarbeitungsanordnung, insbesondere Materialbahn-Abgabeanordnung, insbesondere Materialbahn-Abrollanordnung, insbesondere Materialbahn-Spliceanordnung, mit einer Materialbahn-Einzugsvorrichtung geschaffen werden, die imstande ist, besonders funktionssicher und exakt sowie effizient zu arbeiten.

Diese Aufgabe wird erfindungsgemäß durch die in dem Hauptanspruch 1 angegebenen Merkmale gelöst.

Der Kern der Erfindung liegt in einer Vereinfachung der Handhabung zu bearbeitender/verarbeitender Materialbahnen bzw. Materialrollen.

Die Materialbahn-Einzugsvorrichtung ist imstande, eine Materialbahn, insbesondere geführt, einzuziehen. Der mindestens eine Einzugsantrieb übt dabei insbesondere auf die Materialbahn eine entsprechende Kraft, insbesondere Zugkraft, aus. Es ist zweckmäßig, wenn die einzuziehende Materialbahn bei dem Einzugsvorgang in einer Einzugsrichtung transportiert bzw. gefördert wird. Die Einzugsrichtung ist vorzugsweise in Längsrichtung der einzuziehenden Materialbahn orientiert.

Es ist zweckmäßig, wenn die Materialbahn aus Pappe, Papier oder dergleichen besteht. Günstigerweise ist die Materialbahn endlich. Vorzugsweise ist sie einlagig.

Die mindestens eine Materialbahn-Halteeinrichtung ist insbesondere imstande, die Materialbahn beim Einziehen sicher, beispielweise durch Formschluss, Kraftschluss und/oder Stoffschluss, zu halten. Bevorzugt erstreckt sich diese über die gesamte Breite der einzuziehenden Materialbahn bzw. senkrecht zu deren Transportrichtung bzw. Einzugsrichtung.

Günstigerweise umfasst die mindestens eine Führung Führungseinrichtungen, die wiederum durch paarweise angeordnete, einander gegenüberliegende, insbesondere symmetrisch angeordnete bzw. ausgeführte, Führungselemente gebildet sind. Die benachbart zueinander angeordneten Führungselemente sind beispielsweise zumindest bereichsweise einteilig miteinander verbunden oder separat ausgeführt. Es ist zweckmäßig, wenn jede Führungseinrichtung bzw. jedes Führungselement starr ist. Die mindestens eine Führung verläuft bevorzugt seitlich benachbart bzw. in Querrichtung der einzuziehenden Materialbahn benachbart zu der einzuziehenden Materialbahn. Die mindestens eine Führung verläuft insbesondere seitlich außen benachbart bzw. in Querrichtung der einzuziehenden Materialbahn seitlich außen benachbart zu der einzuziehenden Materialbahn. Sie dient zur direkten oder indirekten Führung der einzuziehenden Materialbahn.

Es ist zweckmäßig, wenn die mindestens eine Führung mindestens eine Weiche aufweist, die insbesondere einen Wechsel zwischen Führungswegen für die einzuziehende Materialbahn bzw. die mindestens eine Materialbahn-Halteeinrichtung erlaubt. Die mindestens eine Materialbahn-Halteeinrichtung ist so besonders funktionssicher an einer entsprechenden Stelle, wie Materialbahn-Einzugsstelle, positionierbar.

Der mindestens eine Einzugsantrieb ist vorzugsweise ein Hydraulik-, Elektro- oder Pneumatikantrieb. Er ist vorzugsweise als Linearantrieb oder Rotationsantrieb ausgeführt. Es ist von Vorteil, wenn der mindestens eine Einzugsantrieb mit der mindestens einen Materialbahn-Halteeinrichtung zumindest bei einem Materialbahn-Einzugsvorgang in direkter oder indirekter Verbindung steht.

Die mindestens eine Materialbahn-Halteeinrichtung und der mindestens eine Einzugsantrieb können in direkter oder indirekter (Antriebs)Verbindung miteinander stehen.

In die Materialbahn-Be-/Verarbeitungsanordnung, insbesondere Materialbahn-Abgabeanordnung, insbesondere Materialbahn-Abrollanordnung, insbesondere Materialbahn-Spliceanordnung, ist mittels der mindestens einen Materialbahn-Einzugsvorrichtung die zu bearbeitende bzw. verarbeitende Materialbahn einziehbar, was besonders effizient ist. Die Materialbahn-Spliceanordnung ist günstigerweise imstande, eine zu Ende gehende, endliche Materialbahn mit einer neuen endlichen Materialbahn unter Bildung einer endlosen Materialbahn zu verbinden. Die Materialbahn-Einzugsvorrichtung erleichtert vorzugsweise das Einfädeln bzw. Einführen der Materialbahn in die Materialbahn-Be-/Verarbeitungsanordnung. Sie hilft beispielsweise bei der Inbetriebsetzung der Materialbahn-Be-/Verarbeitungsanordnung.

Die Materialbahn-Spliceanordnung umfasst günstigerweise eine Verbindevorrichtung zum Verbindung einer endlichen ersten Materialbahn und einer endlichen zweiten Materialbahn miteinander zu einer endlosen Materialbahn. Bevorzugt umfasst die Verbindevorrichtung eine Führung und eine erste Vorbereitungseinrichtung mit einer ersten Transportwalze sowie eine zweite Vorbereitungseinrichtung mit einer zweiten Transportwalze. Es ist von Vorteil, wenn die Verbindevorrichtung außerdem eine erste Verbindeeinrichtung zum Verbinden der endlichen Materialbahnen zu der endlosen Materialbahn und eine zweite Verbindeeinrichtung zum Verbinden der endlichen Materialbahnen zu der endlosen Materialbahn umfasst. Die Verbindevorrichtung weist außerdem vorzugsweise eine verlagerbare Tischeinrichtung zum Zusammenwirken mit den Vorbereitungseinrichtungen und den Verbindeeinrichtungen auf.

Die mindestens eine Führung umfasst mindestens eine verlagerbare, insbesondere verschiebbare, Führungseinrichtung. Die mindestens eine verlagerbare Führungseinrichtung ist vorzugsweise an einer verlagerbaren Be-/Verarbeitungseinrichtung bzw. -vorrichtung der Materialbahn-Be-/Verarbeitungsanordnung angeordnet, was beispielsweisen einen störungsfreien Betrieb erlaubt.

Ein Verfahren zum Einziehen einer Materialbahn mittels einer Materialbahn-Einzugsvorrichtung umfasst vorzugsweise die Schritte
- Halten der einzuziehenden Materialbahn mittels mindestens einer Materialbahn-Halteeinrichtung,
- Führen der mindestens einen Materialbahn-Halteeinrichtung von mindestens einer Materialbahn-Einzugsstelle zu mindestens einer Materialbahn-Übergabestelle mittels mindestens einer Führung, und
- Verlagern der mindestens einen Materialbahn-Halteeinrichtung entlang der mindestens einen Führung unter Einzug der einzuziehenden Materialbahn in Richtung auf die mindestens eine Materialbahn-Übergabestelle mittels mindestens einem mit der mindestens einen Materialbahn-Halteeinrichtung in Verbindung stehenden Einzugsantrieb.

Bevorzugt umfasst eine Anlage mindestens eine Materialbahn-Be-/Verarbeitungsanordnung, insbesondere Materialbahn-Abgabeanordnung, insbesondere Materialbahn-Abrollanordnung, insbesondere Materialbahn-Spliceanordnung, und mindestens eine Materialrollen-Vorbereitungsanordnung zum Vorbereiten einer die einzuziehende Materialbahn tragenden Materialrolle.

Die mindestens eine Materialrollen-Vorbereitungsanordnung ist insbesondere imstande, die Materialrolle für die weitere Be-/Verarbeitung vorzubereiten. Das Vorbereiten der Materialrolle umfasst beispielsweise ein Auspacken bzw. Freilegen derselben, Entfernen bzw. Zerstören von mindestens einer einen freien Materialbahnabschnitt fixierenden Fixierung zum Verhindern eines Abwickelns von der Materialrolle, Entfernen von mindestens einem Umreifungselement, Entfernen eines beschädigten Materialbahnabschnitts von der Materialrolle, Erzeugen einer definierten Endkontur bzw. Kante für die weitere Verarbeitung an der Materialbahn, Anbringen von mindestens einem Klebestück an der Materialbahn, Fixieren von einem endseitigen Materialbahnabschnitt an der Materialrolle und/oder Ausrichten der Materialrolle bzw. der Materialbahn.

Die Materialbahn-Be-/Verarbeitungsanordnung und die mindestens eine Materialrollen-Vorbereitungsanordnung können benachbart oder beabstandet zueinander angeordnet sein. Bevorzugt ist die mindestens eine Materialrollen-Vorbereitungsanordnung extern in Bezug auf die Materialbahn-Be-/Verarbeitungsanordnung angeordnet.

Die Materialbahn-Be-/Verarbeitungsanordnung, insbesondere Materialbahn-Abgabeanordnung, insbesondere Materialbahn-Abrollanordnung, insbesondere Materialbahn-Spliceanordnung, umfasst vorzugsweise mindestens eine Trennabdeckungs-Entfernungsvorrichtung.

Die Trennabdeckungs-Entfernungsvorrichtung umfasst vorzugsweise
a) mindestens eine Trennabdeckungs-Entfernungseinrichtung zum Entfernen von mindestens einer Trennabdeckung von mindestens einem an einer Materialbahn angeordneten Klebestück,
b) mindestens einen Tragkörper, der die mindestens eine Trennabdeckungs-Entfernungseinrichtung trägt, und
c) mindestens einen zumindest bei dem Entfernen der mindestens einen Trennabdeckung benachbart zu der mindestens einen Trennabdeckungs-Entfernungseinrichtung angeordneten Führungsköper zum Führen der Materialbahn.

Die Trennabdeckungs-Entfernungsvorrichtung ist insbesondere imstande, bevorzugt automatisiert, die mindestens eine Trennabdeckung des mindestens einen, insbesondere beidseitig klebenden, Klebe(band)stücks zu entfernen. Die mindestens eine Trennabdeckung wird dann vorzugsweise entsorgt. Die mindestens eine Trennabdeckung bedeckt ursprünglich vorzugsweise einen Klebmassenträger, der bevorzugt beidseitig Klebmasse trägt.

Das Klebestück dient zum klebenden Verbinden von Materialbahnen und umfasst vorzugsweise
a) einen Klebmassenträger, der an zwei gegenüberliegenden Seiten Klebmasse trägt, und
b) mindestens eine Trennabdeckung, die

i) den Klebmassenträger und auch die dort vorliegende Klebmasse ursprünglich zumindest bereichsweise bedeckt,
ii) gegenüber dem Klebmassenträger zumindest bereichsweise übersteht, und
iii) von der Trennabdeckungs-Entfernungsvorrichtung entfernbar ist.

Die Trennabdeckung steht günstigerweise zumindest bereichsweise in Längsrichtung und/oder Querrichtung seitlich gegenüber dem Klebmassenträger vor und ist so besonders einfach von dem Klebmassenträger entfernbar.

Eine Materialbahn-Be-/Verarbeitungsanordnung, insbesondere Materialbahn-Abgabeanordnung, insbesondere Materialbahn-Abrollanordnung, insbesondere Materialbahn-Spliceanordnung, ist günstigerweise derart ausgebildet ist, dass eine Materialbahn aufgrund einer definierten Ausgangslage der einzuziehenden Materialbahn bzw. von einem Ende derselben, vorzugsweise mittels einer Materialbahn-Einzugsvorrichtung, automatisiert einziehbar ist.

Die Materialbahn-Be-/Verarbeitungsanordnung ist beispielsweise imstande, eine Materialbahn, automatisiert bzw. selbständig, insbesondere vollständig automatisiert, einzuziehen. Die, insbesondere genau, definierte Ausgangslage der einzuziehenden Materialbahn bzw. des Endes/Anfangs derselben bzw. der diese tragenden Materialrolle ist beispielsweise mittels einer, beispielsweise externen, Materialrollen-Vorbereitungsanordnung erreichbar. Die vorherigen Ausführungen zu dieser gelten auch hier.

Es ist zweckmäßig, wenn eine Anlage umfasst
a) mindestens eine Materialrollen-Vorbereitungsanordnung zum Bringen einer eine einzuziehende Materialbahn tragenden Materialrolle in eine definierte Ausgangslage, und
b) mindestens eine Materialbahn-Be-/Verarbeitungsanordnung, insbesondere Materialbahn-Abgabeanordnung, insbesondere Materialbahn-Abrollanordnung, insbesondere Materialbahn-Spliceanordnung, die imstande ist, aufgrund der definierten Ausgangslage der Materialrolle die Materialrolle automatisiert aufzunehmen und vorzugsweise die Materialbahn automatisiert aufzunehmen und/oder automatisiert vorzubereiten.

Die Materialbahn-Be-/Verarbeitungsanordnung, insbesondere Materialbahn-Abgabeanordnung, insbesondere Materialbahn-Abrollanordnung, insbesondere Materialbahn-Spliceanordnung, ist insbesondere derart ausgebildet, dass eine Verbindung zwischen einer endlichen Materialbahn und einer weiteren endlichen Materialbahn unter Bildung einer endlosen Materialbahn aufgrund einer definierten Ausgangslage der einzuziehenden Materialbahn bzw. von einem Ende derselben automatisiert vorbereitbar ist.

Die Materialbahn-Be-/Verarbeitungsanordnung ist beispielsweise imstande, automatisiert bzw. selbständig, insbesondere vollständig automatisiert, eine, insbesondere klebende, Verbindung zwischen den endlichen Materialbahnen vorzubereiten bzw. herbeizuführen. Die Vorbereitung der Verbindung umfasst beispielsweise einen Einzug der Materialbahn, eine geeignete Positionierung der Materialbahn, eine Anbringung von mindestens einem Klebestück an der Materialbahn und/oder eine Entfernung von mindestens einer Trennabdeckung von dem mindestens einen Klebestück. Die, insbesondere genau, definierte Ausgangslage der einzuziehenden Materialbahn bzw. des Endes derselben bzw. der diese tragenden Materialrolle ist beispielsweise mittels einer, beispielsweise externen, Materialrollen-Vorbereitungsanordnung erreichbar.

Die vorherigen Ausführungen zu dieser gelten auch hier. Die Gegenstände, wonach die Materialbahn-Be-/Verarbeitungsanordnung, insbesondere Materialbahn-Abgabeanordnung, insbesondere Materialbahn-Abrollanordnung, insbesondere Materialbahn-Spliceanordnung, derart ausgebildet ist, dass eine Materialbahn aufgrund einer definierten Ausgangslage der einzuziehenden Materialbahn bzw. von einem Ende derselben, vorzugsweise mittels einer Materialbahn-Einzugsvorrichtung, automatisiert einziehbar ist, und die Materialbahn-Be-/Verarbeitungsanordnung, insbesondere Materialbahn-Abgabeanordnung, insbesondere Materialbahn-Abrollanordnung, insbesondere Materialbahn-Spliceanordnung, insbesondere derart ausgebildet ist, dass eine Verbindung zwischen einer endlichen Materialbahn und einer weiteren endlichen Materialbahn unter Bildung einer endlosen Materialbahn aufgrund einer definierten Ausgangslage der einzuziehenden Materialbahn bzw. von einem Ende derselben automatisiert vorbereitbar ist, sind gemäß einer bevorzugten Ausführungsform auch kombinierbar.

Die mindestens eine Materialrollen-Vorbereitungsanordnung ist vorzugsweise imstande, die die einzuziehende Materialbahn tragende Materialrolle und damit vorzugsweise auch die enthaltene Materialbahn, insbesondere deren freies Ende, in eine definierte Ausgangslage bzw. ausgerichtete Stellung zu bringen.

Unter einer definierten Ausgangslage der Materialbahn bzw. Materialrolle wird hier insbesondere eine Lage bzw. Stellung der Materialbahn bzw. Materialrolle verstanden, die die Materialbahn-Be-/Verarbeitungsanordnung kennt und es dieser günstigerweise ermöglicht, die Materialrolle bzw. die Materialbahn, automatisiert bzw. selbständig, insbesondere vollständig automatisiert, aufnehmen bzw. die Materialbahn automatisiert bzw. selbständig, insbesondere vollständig automatisiert, einzuführen. Bei der definierten Ausgangslage ist beispielsweise bei dann aufgenommener Materialrolle ein Ende/Anfang der Materialbahn derart in Bezug auf die Materialbahn-Be-/Verarbeitungsanordnung ausgerichtet, dass es/er von der Materialbahn-Be-/Verarbeitungsanordnung auffindbar ist. Bei der definierten Ausgangslage ist die Materialrolle insbesondere in ihrer Umfangsrichtung um ihre Mittel- bzw. Längsachse in Bezug auf die Materialbahn-Be-/Verarbeitungsanordnung ausgerichtet.

Die Materialbahn-Be-/Verarbeitungsanordnung ist insbesondere imstande, die Materialbahn, automatisiert bzw. selbständig, insbesondere vollständig automatisiert, aufzunehmen. Sie ist insbesondere imstande, die Materialbahn, automatisiert bzw. selbständig, insbesondere vollständig automatisiert, einzuziehen bzw. für die weitere Be-/Verarbeitung, wie für eine Verbindung mit einer weiteren Materialbahn zur Bildung einer endlosen Materialbahn, automatisiert bzw. selbständig, insbesondere vollständig automatisiert, vorzubereiten.

Weitere vorteilhafte Ausgestaltungen der Erfindung sind in den Unteransprüchen angegeben.

Die mindestens eine Führung gemäß dem Unteranspruch 2 ermöglicht beispielsweise ein besonders funktionssicheres und effizientes Einführen bzw. Einfädeln der einzuziehenden Materialbahn von außen in die Materialbahn-Be-/Verarbeitungsanordnung.

Die mindestens eine Führung gemäß dem Unteranspruch 3 erlaubt beispielsweise ein besonders funktionssicheres und effizientes Führen der einzuziehenden Materialbahn in das Innere der Materialbahn-Be-/Verarbeitungsanordnung, insbesondere zu einer Be-/Verarbeitungseinrichtung bzw. -vorrichtung derselben.

Gemäß dem Unteranspruch 4 ist die Materialbahn zu einer Vorbereitungseinrichtung der Materialbahn-Be-/Verarbeitungsanordnung führbar, die vorzugsweise imstande ist, die Materialbahn für eine weitere Vorbereitung in Empfang zu nehmen.

Die Ausgestaltung gemäß dem Unteranspruch 5 erlaubt beispielsweise ein besonders funktionssicheres und effizientes Einführen der einzuziehenden Materialbahn in eine benachbarte, stromabwärtige Anordnung bzw. ein neues Einführen einer einzuziehenden Materialbahn. Es ist zweckmäßig, wenn die mindestens eine Führung nur zeitweise in Abhängigkeit von einer jeweiligen Stellung von mindestens einer Be-/Verarbeitungseinrichtung bzw. -vorrichtung geschlossen bzw. durchgängig ist.

Die mindestens eine Führung umfasst vorzugsweise mindestens eine gerade, im Wesentlichen gerade und/oder gekrümmte Führungseinrichtung. Die gekrümmte Führungseinrichtung ist beispielsweise als Bogen, insbesondere Teilkreisbogen, wie Viertelkreisbogen oder Halbkreisbogen, ausgebildet.

Die Ausgestaltung gemäß dem Unteranspruch 8 ist besonders einfach und funktionssicher.

Die Materialbahn-Be-/Verarbeitungsanordnung gemäß dem Unteranspruch 9 ist besonders effizient. Insbesondere ist die Materialrolle vollständig automatisiert bzw. selbständig aufnehmbar.

Die Materialbahn-Einzugsvorrichtung umfasst bevorzugt mindestens ein zwischen dem mindestens einen Einzugsantrieb und der mindestens einen Materialbahn-Halteeinrichtung angeordnetes Kopplungselement. Das mindestens eine Kopplungselement ist vorzugsweise länglich. Es ist zweckmäßig, wenn das mindestens eine Kopplungselement imstande ist, eine Kraft, insbesondere Zugkraft, und Bewegung auf die einzuziehende Materialbahn zu übertragen. Es ist von Vorteil, wenn das mindestens eine Kopplungselement senkrecht zu seiner Längserstreckung auslenkbar ist. Vorzugsweise ist das mindestens eine Kopplungselement als Kette, Seil, Draht, Band, Gurt oder dergleichen ausgeführt.

Es ist zweckmäßig, wenn der mindestens eine Einzugsantrieb mit dem mindestens einen Kopplungselement in, direkter oder indirekter, Antriebsverbindung steht. Der mindestens eine Einzugsantrieb steht mit dem mindestens einen Kopplungselement vorzugsweise über mindestens ein antreibbares, insbesondere drehantreibbares, Antriebselement, wie Antriebsrad, in Antriebsverbindung. Wenn das mindestens eine Kopplungselement als Kette ausgeführt ist, steht der mindestens eine Einzugsantrieb günstigerweise über mindestens ein Antriebszahnrad mit der mindestens einen Kette in Antriebsverbindung. Das mindestens eine Antriebszahnrad steht mit der mindestens einen Kette bevorzugt dann in Eingriff. Es ist zweckmäßig, wenn längs der mindestens einen Führung mehrere Antriebselemente bzw. Einzugsantriebe mit dem mindestens einen Kopplungselement in Antriebsverbindung stehen.

Die mindestens eine Materialbahn-Halteeinrichtung ist bevorzugt imstande, die einzuziehende Materialbahn automatisiert aufzunehmen. Die mindestens eine Materialbahn-Halteeinrichtung ist besonders effizient. Sie kommt insbesondere ohne einen Bediener aus und arbeitet, insbesondere vollständig, automatisiert bzw. selbständig.

Die Materialbahn-Einzugsvorrichtung weist bevorzugt mindestens eine Aktivierungsvorrichtung zum Aktivieren der mindestens einen Materialbahn-Halteeinrichtung auf. Die mindestens eine Aktivierungseinrichtung ist imstande, die mindestens eine Materialbahn-Halteeinrichtung zu aktivieren und in eine Materialbahn-Haltestellung zu bringen. Die mindestens eine Aktivierungseinrichtung ist so imstande, das Halten der einzuziehenden Materialbahn an der mindestens einen Materialbahn-Halteeinrichtung auszulösen. Es ist zweckmäßig, wenn dafür die mindestens eine Aktivierungseinrichtung und die mindestens eine Materialbahn-Halteeinrichtung in Verbindung, wie Antriebsverbindung oder Signalverbindung, miteinander stehen.

Die einzuziehende Materialbahn, vorzugsweise eine diese tragende Materialrolle, und die mindestens eine Materialbahn-Halteeinrichtung sind günstigerweise zur Aufnahme der einzuziehenden Materialbahn relativ zueinander verlagerbar. Diese Ausgestaltung erlaubt eine Ausrichtung der einzuziehenden Materialbahn und der mindestens einen Materialbahn-Halteeinrichtung zueinander. Beispielsweise ist die einzuziehende Materialbahn, insbesondere durch Verlagerung der diese tragenden Materialrolle, für die Aufnahme der einzuziehenden Materialbahn verlagerbar. Es ist zweckmäßig, wenn die Materialbahn-Einzugsvorrichtung dafür imstande, die einzuziehende Materialbahn bzw. die diese tragende Materialrolle zu verlagern bzw. eine Verlagerung derselben zumindest auszulösen. Günstigerweise wird dabei ein die Materialrolle aufnehmendes Aufnahmeteil gedreht bzw. verschwenkt. Alternativ ist die Materialbahn-Einzugsvorrichtung imstande, die mindestens eine Materialbahn-Halteeinrichtung für die Aufnahme der einzuziehenden Materialbahn zu verlagern. Es ist zweckmäßig, wenn die mindestens eine Materialbahn-Halteeinrichtung und die einzuziehende Materialbahn bzw. deren Ende derart bei Aufnahme der einzuziehenden Materialbahn ausgerichtet sind, dass die mindestens eine Materialbahn-Halteeinrichtung imstande ist, die einzuziehende Materialbahn endseitig bzw. randseitig sicher zu halten.

Die Materialbahn-Einzugsvorrichtung umfasst vorzugsweise mindestens ein Materialbahn-Detektionselement zum Detektieren eines Endes der einzuziehenden Materialbahn. Das mindestens eine Materialbahn-Detektionselement ist insbesondere imstande, eine endseitige (Quer-) Kante bzw. einen freien Endabschnitt der einzuziehenden Materialbahn zu detektieren. Es arbeitet vorzugsweise berührungslos und ist als Sensor, Kamera oder dergleichen ausgeführt. Alternativ umfasst das mindestens eine Materialbahn-Detektionselement mindestens ein Kontaktmittel oder Fühlermittel.

Die mindestens eine Materialbahn-Halteeinrichtung ist bevorzugt als Materialbahn-Klemmeinrichtung zum klemmenden Halten der einzuziehenden Materialbahn ausgeführt. Die Materialbahn-Klemmeinrichtung ist besonders funktionssicher. Die einzuziehende Materialbahn bleibt unbeschädigt. Die Materialbahn-Klemmeinrichtung ist imstande, im Einsatz eine Klemmkraft auf die einzuziehende Materialbahn auszuüben.

Die Materialbahn-Klemmeinrichtung weist günstigerweise mindestens einen Klemmkörper auf, der zwischen einer Klemmstellung zum klemmenden Halten der einzuziehenden Materialbahn und einer inaktiven Ruhestellung verlagerbar ist. Der mindestens eine Klemmkörper ist vorzugsweise verschwenkbar gelagert und starr. In der Klemmstellung liegt er vorzugsweise an der einzuziehenden Materialbahn klemmend bzw. reibschlüssig an. In seiner inaktiven Ruhestellung ist der mindestens eine Klemmkörper günstigerweise beabstandet zu der einzuziehenden Materialbahn angeordnet. Der mindestens eine Klemmkörper ist vorzugsweise als Steg, Platte, Stift, Zahn, Walze oder dergleichen ausgeführt. Vorzugsweise erstreckt er sich, bevorzugt unterbrechungsfrei, über die gesamte Breite der einzuziehenden Materialbahn.

Die Materialbahn-Klemmeinrichtung umfasst bevorzugt mindestens einen Haltekörper zum Halten der einzuziehenden Materialbahn. Der mindestens eine Haltekörper ist bevorzugt starr. Er ist vorzugsweise als Steg, Platte, oder dergleichen ausgebildet. Vorzugsweise erstreckt er sich, bevorzugt unterbrechungsfrei, über die gesamte Breite der einzuziehenden Materialbahn.

Bevorzugt sind der mindestens eine Klemmkörper und der mindestens eine Haltekörper benachbart zueinander angeordnet und bilden in der Klemmstellung gemeinsam mindestens einen Klemmspalt zum klemmenden Halten der einzuziehenden Materialbahn aus. Der mindestens eine Haltekörper bildet für den mindestens einen Klemmkörper vorzugsweise einen (Klemm)Gegenkörper. In dem Klemmspalt üben der mindestens eine Klemmkörper und der mindestens eine Haltekörper eine Klemmkraft auf die einzuziehende Materialbahn aus. Der mindestens eine Klemmkörper und der mindestens eine Haltekörper sind dabei vorzugsweise einander gegenüberliegend angeordnet.

Die mindestens eine Materialbahn-Halteeinrichtung ist günstigerweise als Materialbahn-Ansaugeinrichtung zum Halten der einzuziehenden Materialbahn durch Ansaugen ausgeführt.

Es ist von Vorteil, wenn die Materialbahn-Ansaugeinrichtung mindestens einen mit mindestens einer Ansaugquelle in Strömungsverbindung stehenden Ansaugkörper zum Halten der einzuziehenden Materialbahn aufweist. Die mindestens eine Ansaugquelle ist vorzugsweise als Vakuumpumpe ausgeführt. Die Strömungsverbindung zwischen der mindestens einen Ansaugquelle und dem mindestens einen Ansaugkörper ist vorzugsweise durch eine Strömungsleitung gebildet.

Die mindestens eine Führung weist bevorzugt auf
a) mindestens eine erste Führungseinrichtung zum Einziehen der einzuziehenden Materialbahn von einer ersten Materialbahn-Einzugsstelle, insbesondere bei Abrollen der einzuziehenden Materialbahn von einer Materialrolle in einer ersten Abrollrichtung, und
b) mindestens eine zweite Führungseinrichtung zum Einziehen der einzuziehenden Materialbahn von einer zu der ersten Materialbahn-Einzugsstelle beabstandeten zweiten Materialbahn-Einzugsstelle, insbesondere bei Abrollen der einzuziehenden Materialbahn von der Materialrolle in einer zu der ersten Abrollrichtung gegensinnigen zweiten Abrollrichtung.

Die mindestens eine erste und zweite Führungseinrichtung sind vorzugsweise im Wesentlichen V-, U- oder Y-förmig angeordnet. Insbesondere ist so die einzuziehende Materialbahn unabhängig von ihrer Abwickelrichtung von einer Materialrolle aufnehmbar.

Vorzugsweise ist die mindestens eine Führung als Kulissenführung ausgeführt. Die Materialbahn-Einzugsvorrichtung ist besonders funktionssicher.

Es ist zweckmäßig, wenn die Materialbahn-Einzugsvorrichtung imstande ist, automatisiert die einzuziehende Materialbahn einzuziehen. Die Materialbahn-Einzugsvorrichtung ist imstande, insbesondere vollständig, automatisiert bzw. selbständig die Materialbahn einzuziehen, was äußerst effizient ist. Ein Bediener ist hierzu nicht notwendig.

Die mindestens eine Materialrollen-Vorbereitungsanordnung weist vorzugsweise mindestens eine Materialrollen-Umfangsrichtungs-Ausrichtungsvorrichtung zum Ausrichten der Materialrolle in deren Umfangsrichtung, insbesondere in eine definierte Ausgangslage, auf. Die mindestens eine Materialrollen-Umfangsrichtungs-Ausrichtungsvorrichtung ist bevorzugt imstande, die Materialrolle in ihrer Umfangsrichtung um ihre Längs- bzw. Mittelachse zu verschwenken. Es ist zweckmäßig, wenn die mindestens eine Materialrollen-Umfangsrichtungs-Ausrichtungsvorrichtung die Materialrolle derart ausrichtet, dass sich beispielsweise deren äußeres freies Ende und/oder mindestens ein an dieser angeordnetes Klebestück in einer vorbestimmten bzw. definierten, insbesondere auffindbaren, Stellung bzw. Position befindet.

Die mindestens eine Materialbahn-Be-/Verarbeitungsanordnung erhält vorzugsweise die Materialrolle in durch die mindestens eine Materialrollen-Umfangsrichtungs-Ausrichtungsvorrichtung ausgerichteter Stellung, insbesondere für eine definierte Ausgangslage.

Es ist zweckmäßig, wenn die mindestens eine Materialbahn-Be-/Verarbeitungsanordnung imstande ist, die Materialrolle automatisiert aufzunehmen. Die Materialbahn-Be-/Verarbeitungsanordnung ist imstande, die Materialrolle, insbesondere vollständig, automatisiert bzw. selbständig aufzunehmen. Dies erfolgt insbesondere dann besonders funktionssicher, wenn die Materialbahn-Be-/Verarbeitungsanordnung die Materialrolle in ihrer ausgerichteten Stellung aufnimmt. Die Materialbahn-Be-/Verarbeitungsanordnung weiß dann beispielsweise, wo sich das äußere freie Ende der einzuziehenden Materialbahn und/oder mindestens ein an dieser angeordnetes Klebestück exakt befindet. Die mindestens eine Materialrollen-Vorbereitungsanordnung bringt vorzugsweise mindestens ein Klebestück an der einzuziehenden Materialbahn zur klebenden Verbindung mit einer anderen Materialbahn an.

Die mindestens eine Trennabdeckungs-Entfernungseinrichtung und der mindestens eine Führungskörper sind vorzugsweise zwischen einer zueinander benachbarten Trennabdeckungs-Entfernungsstellung zum Entfernen der mindestens einen Trennabdeckung von dem mindestens einen Klebestück und einer inaktiven Ruhestellung relativ zueinander verlagerbar. Die mindestens eine Trennabdeckungs-Entfernungseinrichtung und der mindestens eine Führungskörper sind relativ zueinander verlagerbar, insbesondere verschiebbar und/oder verschwenkbar.

Die mindestens eine Trennabdeckungs-Entfernungseinrichtung ist bevorzugt als Unterdruckkörper, insbesondere Unterdruckwalze, ausgeführt. Der Unterdruckkörper ist vorzugsweise verlagerbar, insbesondere verschiebbar und /oder verschwenkbar. Er steht vorzugsweise mit einer Unterdruckquelle, wie Vakuumpumpe, in Strömungsverbindung.

Es ist zweckmäßig, wenn der mindestens eine Führungskörper als Unterdruckkörper, insbesondere Unterdruckwalze, ausgeführt ist. Der mindestens eine Führungskörper ist vorzugsweise verlagerbar, insbesondere verschiebbar und/oder verschwenkbar. Er steht vorzugsweise mit einer Unterdruckquelle, wie Vakuumpumpe, in Strömungsverbindung.

Nachfolgend wird unter Bezugnahme auf die beigefügte Zeichnung eine bevorzugte Ausführungsform der Erfindung beispielhaft beschrieben. Dabei zeigen:
- Fig. 1: einen Schnitt durch eine Anlage mit einer stark verein-facht, nicht maßstäblich dargestellten Materialrollen-Vorbereitungsanordnung und einer erfindungsgemäßen Materialbahn-Spliceanordnung, deren eine Material-rolle sich in einem Abrollzustand und deren neue Ma-terialrolle sich in einem vorbereiteten Zustand befin-det,
- Fig. 2: eine Fig. 1 entsprechende Ansicht der Materialbahn-Spliceanordnung, deren eine Unterdruckwalze zur Vorbereitung der neuen Materialbahn benachbart zu einem Klebestück an der neuen Materialbahn zur Ent-fernung dessen Trennabdeckung angeordnet ist,
- Fig. 3, 4: vergrößerte Teilansichten III, IV von Fig. 2, die die Entfernung der Trennabdeckung veranschaulichen,
- Fig. 5: eine Fig. 2 entsprechende Ansicht der Materialbahn-Spliceanordnung, bei der eine Verbindeeinrichtung und Vorbereitungseinrichtung sowie Tischeinrichtung zum Verbinden der neuen und ursprünglichen Materialbahn benachbart zueinander angeordnet sind,
- Fig. 6, 7: vergrößerte Teilansichten von Fig. 5, die ein Abschneiden der ursprünglichen Materialbahn und die Fertigstellung der Spliceverbindung zwischen der neuen und ursprünglichen Materialbahn veranschaulichen,
- Fig. 8: eine Fig. 2 entsprechende Ansicht, bei welcher sich nun im Vergleich mit Fig. 1 die andere Materialrolle in einem Abrollzustand befindet,
- Fig. 9: eine Fig. 2 entsprechende Ansicht, bei welcher im Vergleich mit Fig. 3 die andere Verbindeeinrichtung und die andere Vorbereitungseinrichtung sowie die Tischeinrichtung zum Verbinden der Materialbahnen benachbart zueinander angeordnet sind,

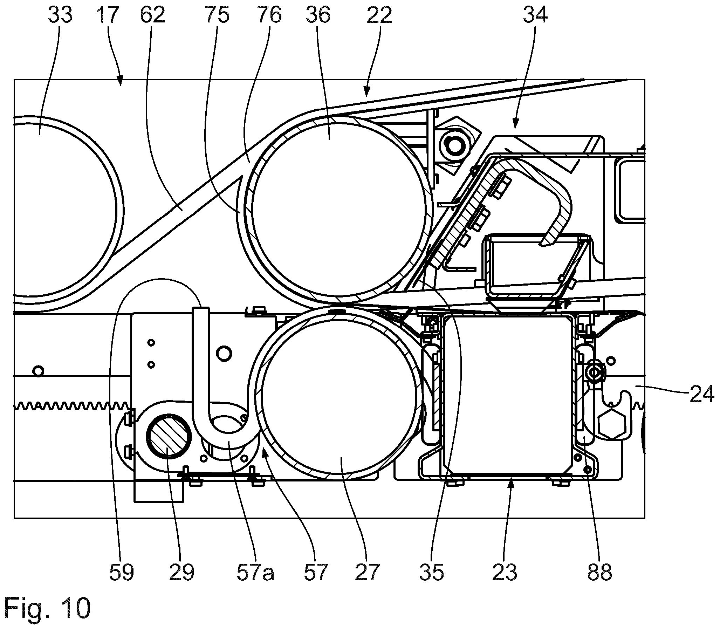

- Fig. 10: eine vergrößerte Teilansicht IX von Fig. 9,
- Fig. 11: eine perspektivische Ansicht einer in der veranschaulichten Materialbahn-Spliceanordnung angeordneten Materialrolle samt eingangsseitigen Führungseinrich-tungen der Führung,
- Fig. 12: einen Querschnitt durch die in Fig. 11 gezeigte Anord-nung,
- Fig. 13: die in Fig. 12 gekennzeichnete Einzelheit XIII in ver-größertem Maßstab, wobei sich der Klemmkörper der Materialbahn-Klemmeinrichtung in einer inaktiven Ruhestellung befindet,
- Fig. 14: eine Fig. 13 entsprechende Ansicht, wobei sich der Klemmkörper nun in einer Klemmstellung befindet und die einzuziehende Materialbahn beklemmt,
- Fig. 15: eine perspektivische Ansicht einer in der Material-bahn-Spliceanordnung angeordneten Materialrolle samt eingangsseitigen Führungseinrichtungen gemäß einer zweiten Ausführungsform,
- Fig. 16: eine Teil-Seitenansicht der in Fig. 15 gezeigten An-ordnung,
- Fig. 17: die in Fig. 16 gekennzeichnete Einzelheit in vergrößer-tem Maßstab, wobei die Materialbahn-Ansaugeinrichtung inaktiv ist, und
- Fig. 18: eine Fig. 17 entsprechende Ansicht, wobei die Materi-albahn-Ansaugeinrichtung aktiv ist.

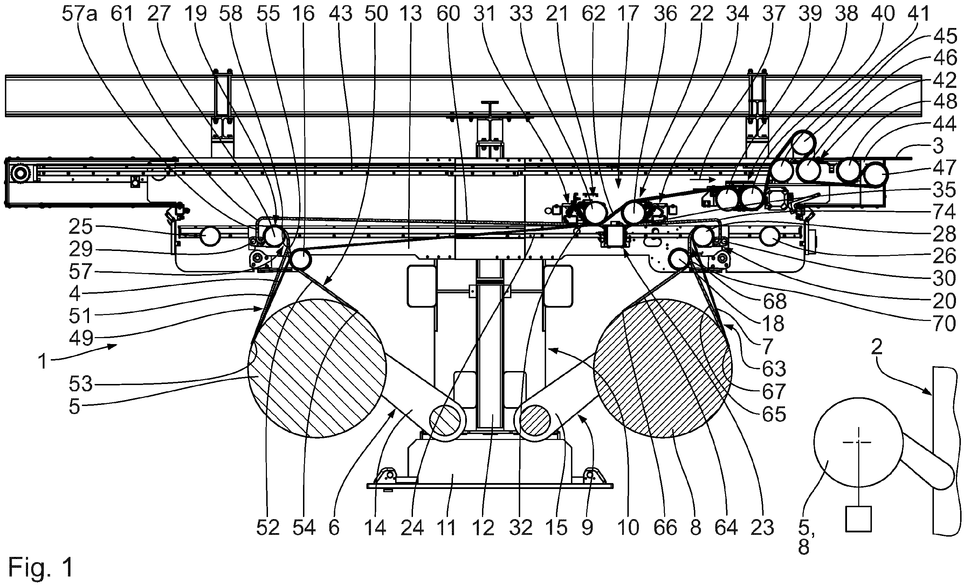

Zunächst bezugnehmend auf Fig. 1 umfasst eine nicht in ihrer Gesamtheit dargestellte Wellpappeanlage mehrere Materialbahn-Spliceanordnungen 1 und mindestens eine diesen vorgeordnete Materialrollen-Vorbereitungsanordnung 2. Die Materialbahn-Spliceanordnungen 1 sind bevorzugt identisch ausgeführt. Sie sind beabstandet zu der Materialrollen-Vorbereitungsanordnung 2 angeordnet.

Die Materialrollen-Vorbereitungsanordnung 2 umfasst eine Aufnahmevorrichtung zur Aufnahme einer vorzubereitenden Materialrolle mit einer aufgewickelten Materialbahn. Sie weist außerdem mindestens eine, bevorzugt mehrere, Materialrollen-Vorbereitungseinrichtungen zur Vorbereitung der aufgenommenen Materialrolle für die weitere Be-/Verarbeitung auf.

Die Aufnahmevorrichtung hat eine Dreheinrichtung zum Drehantreiben bzw. Schwenken der aufgenommenen Materialrolle um deren Mittelachse bzw. in deren Umfangsrichtung. Die Materialrollen-Vorbereitungsanordnung 2 weist vorzugsweise eine Erfassungseinrichtung zum Erfassen eines freien äußeren Endes der aufgewickelten Materialbahn und/oder von mindestens einem an der Materialbahn angeordneten Splicestück auf.

Jede Materialbahn-Spliceanordnung 1 erhält vorbereitete Materialrollen in ausgerichteter bzw. definierter Stellung, die einen Ausgang für die Handhabung mittels der Materialbahn-Spliceanordnung 1 darstellt. Beispielsweise werden dazu, bevorzugt automatisierte, Transportwagen eingesetzt, die die vorbereiteten Materialrollen zu der jeweiligen Materialrollen-Spliceanordnung 1 fahren.

Jede Materialbahn-Spliceanordnung 1 dient zum Bereitstellen einer endlosen Materialbahn 3, aus der beispielsweise eine Wellbahn oder Glattbahn als Bestandteil einer einseitig kaschierten Wellpappebahn erzeugt wird.

Nachdem die Materialbahn-Spliceanordnungen 1 identisch sind, wird nachfolgt nur die in den Figuren dargestellte beschrieben. Zunächst wird deren Aufbau erläutert.

Die in den Figuren veranschaulichte Materialbahn-Spliceanordnung 1 umfasst zum Abrollen einer endlichen ersten Materialbahn 4 von einer ersten Materialrolle 5 eine erste Abrollvorrichtung 6 und zum Abrollen einer endlichen zweiten Materialbahn 7 von einer zweiten Materialrolle 8 eine zweite Abrollvorrichtung 9. Die endliche erste Materialbahn 4 und die endliche zweite Materialbahn 7 werden zum Bereitstellen der endlosen Materialbahn 3 mittels der Materialbahn-Spliceanordnung 1 fest miteinander verbunden.

Die Materialbahn-Spliceanordnung 1 hat ein Grundgestell 10 mit einem Grundgestell-Sockel 11, einem Grundgestell-Ständer 12 und einem Grundgestell-Träger 13. Der Grundgestell-Sockel 11 ist an einem Boden bzw. Untergrund (nicht dargestellt) befestigt. An dem Grundgestell-Sockel 11 ist der Grundgestell-Ständer 12 oben angebracht. Der Grundgestell-Ständer 12 erstreckt sich vertikal bzw. senkrecht zu dem Boden. Der Grundgestell-Träger 13 ist an einem dem Grundgestell-Sockel 11 gegenüberliegenden Endbereich des Grundgestell-Ständers 12 angeordnet und verläuft parallel bzw. horizontal zu dem Boden.

Ausgehend von dem Grundgestell-Sockel 11 erstrecken sich die erste Abrollvorrichtung 6 und die zweite Abrollvorrichtung 9. Die Abrollvorrich-tungen 6, 9 sind schwenkbar an dem Grundgestell-Sockel 11 gelagert und relativ zu dem Grundgestell-Ständer 12 einander gegenüberliegend angeordnet.

Die erste Abrollvorrichtung 6 weist zur Aufnahme der ersten Materialrolle 5 ein erstes Aufnahmeteil (nicht dargestellt) auf, das in eine zentrale Öffnung der ersten Materialrolle 5 geführt und zwischen zwei parallel zueinander verlaufenden ersten Haltearmen 14 der ersten Abrollvorrichtung 6 um eine horizontale erste Drehachse gelagert ist.

Die zweite Abrollvorrichtung 9 ist entsprechend der ersten Abrollvorrichtung 6 ausgebildet. Sie weist zur Aufnahme der zweiten Materialrolle 8 ein zweites Aufnahmeteil (nicht dargestellt) auf, das in eine zentrale Öffnung der zweiten Materialrolle 8 geführt und zwischen zwei parallel zueinander verlaufenden zweiten Haltearmen 15 der zweiten Abrollvorrichtung 9 um eine horizontale zweite Drehachse gelagert ist. Die Drehachsen der Aufnahmeteile verlaufen parallel zueinander.

Die endliche erste Materialbahn 4 wird gemäß Fig. 1 über eine erste Zuführwalze 16 einer Schneide- und Verbindevorrichtung 17 der Materialbahn-Spliceanordnung 1 zugeführt, während die endliche zweite Materialbahn 7 gemäß Fig. 1 über eine zweite Zuführwalze 18 in die Materialbahn-Spliceanordnung 1 zur Vorbereitung eines Splicevorgangs geführt ist. Jede Zuführwalze 16, 18 ist an dem Grundgestell-Träger 13 drehbar gelagert. Sie weisen zueinander parallel verlaufende, horizontale Drehachsen auf. Die Zuführwalzen 16, 18 sind an Zuführwalzen-Tragarmen drehbar angeordnet, die schwenkbar an dem Grundgestell-Träger 13 gelagert sind.

Die Schneide- und Verbindevorrichtung 17 dient zum Herstellen der endlosen Materialbahn 3 aus den endlichen Materialbahnen 4, 7. Sie umfasst eine erste Vorbereitungseinrichtung 19, eine zweite Vorbereitungseinrichtung 20, eine erste Verbindeeinrichtung 21, eine zweite Verbindeeinrichtung 22, eine Tischeinrichtung 23 und eine Führung 24.

Die erste Vorbereitungseinrichtung 19 befindet sich gemäß Fig. 1 momentan oberhalb der ersten Materialrolle 5 an dem Grundgestell-Träger 13, während sich die zweite Vorbereitungseinrichtung 20 gemäß Fig. 1 momentan im Bereich der zweiten Materialrolle 8 oberhalb derselben an dem Grundgestell-Träger 13 befindet.

Die Führung 24 erstreckt sich gerade in/an dem Grundgestell-Träger 13 und parallel zu dem Boden. Die Tischeinrichtung 23 ist zwischen den Vorbereitungseinrichtungen 19, 20 angeordnet. Die Vorbereitungseinrichtungen 19, 20 und die Tischeinrichtung 23 sind entlang der Führung 24 und relativ zu den Verbindeeinrichtungen 21, 22 verlagerbar, die längs der Führung 24 beabstandet zueinander an dem Grundgestell-Träger 13 oberhalb der Führung 24 angeordnet sind.

Längs der Führung 24 sind außerdem eine erste Unterdruckwalze 25 und eine zweite Unterdruckwalze 26 verlagerbar geführt. Die erste Unterdruckwalze 25 ist relativ zu der ersten Vorbereitungseinrichtung 19 gegenüberliegend zu der Tischeinrichtung 23 angeordnet und unter Unterdruck setzbar. Die erste Vorbereitungseinrichtung 19 ist so zwischen der ersten Unterdruckwalze 25 und der Tischeinrichtung 23 angeordnet. Die zweite Unterdruckwalze 26 ist relativ zu der zweiten Vorbereitungseinrichtung 20 gegenüberliegend zu der Tischeinrichtung 23 angeordnet und unter Unterdruck setzbar. Die zweite Vorbereitungseinrichtung 20 ist so zwischen der zweiten Unterdruckwalze 26 und der Tischeinrichtung 23 angeordnet.

Die Vorbereitungseinrichtungen 19, 20 sind identisch aufgebaut und bezüglich einer vertikal verlaufenden Symmetrieebene im Wesentlichen symmetrisch angeordnet.

Die erste Vorbereitungseinrichtung 19 weist zum Zuführen der endlichen ersten Materialbahn 4 eine drehbar gelagerte erste Transport- bzw. Haltewalze 27 auf. Die erste Transportwalze 27 der ersten Vorbereitungseinrichtung 19 ist zum Halten und Zuführen der endlichen ersten Materialbahn 4 beispielsweise mit einer Haftschicht versehen und zum Transportieren der endlichen ersten Materialbahn 4 zu der ersten bzw. zweiten Verbindeeinrichtung 21, 22 entlang der Führung 24 verlagerbar. Eine Ausgestaltung der ersten Transportwalze 27 ohne Haftschicht ist alternativ möglich.

Die zweite Vorbereitungseinrichtung 20 weist zum Zuführen der endlichen zweiten Materialbahn 7 eine drehbar gelagerte zweite Transport- bzw. Haltewalze 28 auf. Die zweite Transportwalze 28 der zweiten Vorbereitungseinrichtung 20 ist zum Halten und Zuführen der endlichen zweiten Materialbahn 7 beispielsweise mit einer Haftschicht versehen und zum Transportieren der endlichen zweiten Materialbahn 7 zu der ersten bzw. zweiten Verbindeeinrichtung 21, 22 entlang der Führung 24 verlagerbar. Eine Ausgestaltung der zweiten Transportwalze 28 ohne Haftschicht ist alternativ möglich.

Jede Vorbereitungseinrichtung 19, 20 weist zu ihrer Verlagerung entlang der Führung 24 einen eigenen ersten bzw. zweiten Verlagerungsantrieb 29, 30 auf.

Die Verbindeeinrichtungen 21, 22 sind identisch ausgebildet und bezüglich einer vertikal verlaufenden Symmetrieebene symmetrisch an dem Grundgestell-Träger 13 angeordnet.

Die ersten Verbindeeinrichtung 21 umfasst zum Schneiden der endlichen ersten Materialbahn 4 vor dem Verbinden mit der endlichen zweiten Materialbahn 7 eine erste Schnitteinheit 31 mit einem betätigbaren ersten Schnittmesser 32 und zum Verbinden der endlichen Materialbahnen 4, 7 zu der endlosen Materialbahn 3 eine erste Anpresswalze 33. Die erste Schnitteinheit 31 der ersten Verbindeinrichtung 21 und die erste Anpresswalze 33 sind unmittelbar benachbart zu der Führung 24 derart an dem Grundgestell-Träger 13 befestigt, dass die Transportwalzen 27, 28 der Vorbereitungseinrichtungen 19, 20 und die Tischeinrichtung 23 entlang der Führung 24 an den Verbindeeinrichtungen 21, 22 vorbeiführbar sind.

Die zweite Verbindeeinrichtung 22 umfasst zum Schneiden der endlichen zweiten Materialbahn 7 vor dem Verbinden mit der endlichen ersten Materialbahn 4 eine zweite Schnitteinheit 34 mit einem betätigbaren zweiten Schnittmesser 35 und zum Verbinden der endlichen Materialbahnen 4, 7 zu der endlosen Materialbahn 3 eine zweite Anpresswalze 36. Die zweite Schnitteinheit 34 der zweiten Verbindeeinrichtung 22 und die zweite Anpresswalze 36 sind unmittelbar benachbart zu der Führung 24 derart an dem Grundgestell-Träger 13 befestigt, dass die Transportwalzen 27, 28 der Vorbereitungseinrichtungen 19, 20 und die Tischeinrichtung 23 entlang der Führung 24 an den Verbindeeinrichtungen 21, 22 vorbeiführbar sind.

Die Unterdruckwalzen 25, 26, die Zuführwalzen 16, 18 und die Transportwalzen 27, 28 sowie die Anpresswalzen 33, 36 erstrecken sich parallel zueinander und horizontal. Sie erstrecken sich auch parallel zu den Materialrollen 5, 8.

Die Tischeinrichtung 23 wirkt in Abhängigkeit ihrer Position mit der ersten Vorbereitungseinrichtung 19, der zweiten Vorbereitungseinrichtung 20, der ersten Verbindeeinrichtung 21 bzw. der zweiten Verbindeinrichtung 22 zusammen und ist, insbesondere auch unabhängig von diesen, entlang der Führung 24 verlagerbar.

Der Schneide- und Verbindevorrichtung 17 ist in Transportrichtung 37 der endlosen Materialbahn 3 bzw. endlichen ersten Materialbahn 4 eine Einfädel-Assistenzanordnung 38 nachgeordnet, die im Wesentlichen oberhalb der zweiten Materialrolle 8 und oberhalb der Führung 24 an dem Grundgestell-Träger 13 angeordnet ist. Die Einfädel-Assistenzanordnung 38 umfasst eine erste Förderwalze 39 und eine zweite Förderwalze 40, die identisch sind und erst parallel zueinander angeordnet sind. Sie erstrecken sich wie die Unterdruckwalzen 25, 26, Zuführwalzen 16, 18, Transportwalzen 27, 28 und die Anpresswalzen 33, 36 senkrecht zu der Transportrichtung 37 der endlosen Materialbahn 3 bzw. der endlichen Materialbahn 4, 7. Die Förderwalzen 39, 40 sind in dem Grundgestell-Träger 13 angeordnet und bilden zusammen einen Förderspalt aus, durch den die endlose Materialbahn 3 bzw. endliche erste Materialbahn 4 läuft.

Die Einfädel-Assistenzanordnung 38 umfasst ferner zwei Förderwalzen-Antriebe, die mit einer Förderwalze 39 bzw. 40 in Antriebsverbindung stehen. Die Förderwalzen 39, 40 sind über ein Getriebe miteinander gekoppelt und gegensinnig drehantreibbar. Die Einfädel-Assistenzanordnung 38 ist imstande, ein Einführen der endlichen ersten oder zweiten Materialbahn 4, 7 in die Materialbahn-Spliceanordnung 1 zu unterstützen. Bei einem solchen Einfädelvorgang sind die Förderwalzen 39, 40 zum entsprechenden Einfädeln der jeweiligen endlichen Materialbahn 4, 7 drehangetrieben.

Stromabwärts zu der Einfädel-Assistenzanordnung 38 in Bezug auf die Transportrichtung 37 ist eine erste Umlenkwalze 41 angeordnet, die drehbar an einem Speicherwagen 42 gelagert und der endlosen Materialbahn 3 bzw. endlichen ersten Materialbahn 4 zur Umlenkung derselben zugeordnet ist.

Der Speicherwagen 42 ist im Bereich eines dem Grundgestell-Träger 13 abgewandten, oberen Endes des Grundgestell-Trägers 13 angeordnet und ist entlang einer Speicherwagenführung 43 verlagerbar, die sich parallel zu dem Boden und oberhalb der Führung 24 in dem Grundgestell-Träger 13 erstreckt. Die Speicherwagenführung 43 gibt eine Verlagerungsbahn für den Speicherwagen 42 vor und erstreckt sich im Wesentlichen entlang des gesamten Grundgestell-Trägers 13. Der Speicherwagen 42 ist zwischen einer ersten Endposition und einer zweiten Endposition in gegensinnigen Verlagerungsrichtungen verlagerbar. In der ersten Endposition ist der Speicherwagen 42 benachbart zu einem Materialbahnauslauf bzw. -ausgang 44 angeordnet, während sich der Speicherwagen 42 in der zweiten Endposition beabstandet bzw. entfernt zu dem Materialbahnauslauf 44 befindet. In Fig. 1 ist der Speicherwagen 42 benachbart zu dem Materialbahnauslauf 44 angeordnet.

Zur Umlenkung der endlosen Materialbahn 3 bzw. der endlichen ersten Materialbahn 4 ist im Bereich des Materialbahnauslaufs 44 oberhalb der Speicherwagenführung 43 eine zweite Umlenkwalze 45 drehbar an dem Grundgestell-Träger 13 gelagert. Die zweite Umlenkwalze 45 ist in Bezug auf die Transportrichtung 37 der ersten Umlenkwalze 41 nachgeordnet.

Der zweiten Umlenkwalze 45 ist in Bezug auf die Transportrichtung 37 zur Umlenkung der endlosen Materialbahn 3 bzw. der endlichen ersten Materialbahn 4 eine dritte Umlenkwalze 46 nachgeordnet, die an dem Speicherwagen 42 drehbar gelagert und benachbart zu der ersten Umlenkwalze 41 angeordnet ist.

Zur Umlenkung der endlosen Materialbahn 3 bzw. der endlichen ersten Materialbahn 4 ist im Bereich des Materialbahnauslaufs 44 eine vierte Umlenkwalze 47 auf Höhe der Speicherwagenführung 43 an dem Grundgestell-Träger 13 drehbar gelagert. Die vierte Umlenkwalze 47 ist der dritten Umlenkwalze 46 in Bezug auf die Transportrichtung 37 nachgeordnet.

Der vierten Umlenkwalze 47 ist in Bezug auf die Transportrichtung 37 zur Umlenkung der endlosen Materialbahn 3 bzw. der endlichen ersten Materialbahn 4 eine fünfte Umlenkwalze 48 nachgeordnet, die an dem Speicherwagen 42 gelagert ist. Die dritte Umlenkwalze 46 ist zwischen der ersten Umlenkwalze 41 und der fünften Umlenkwalze 48 angeordnet.

Die Drehachsen der Umlenkwalzen 41, 45, 46, 47, 48 verlaufen parallel zueinander und liegen in einer gemeinsamen horizontalen Ebene. Sie erstrecken sich senkrecht zu der Transportrichtung 37.

Der Speicherwagen 42 ist aufgrund einer Änderung der Bahnspannung der endlosen Materialbahn 3 längs der Speicherwagenführung 43 verlagerbar. Alternativ oder zusätzlich ist der Speicherwagen 42 durch einen Speicherwagen-Verstellantrieb verlagerbar.

Die Materialbahn-Spliceanordnung 1 hat eine Materialbahn-Einzugs-Kulissenführung 49 zur Führung der endlichen ersten Materialbahn 4, der endlichen zweiten Materialbahn 7 bzw. der endlosen Materialbahn 3 bei einem Einzugsvorgang.

Die Kulissenführung 49 erstreckt sich bei einem vollständigen Einzugsvorgang von einem Materialbahneinlauf der Materialbahn-Spliceanordnung 1 bzw. von der ersten Materialrolle 5 und der zweiten Materialrolle 8 unterbrechungsfrei bzw. im Wesentlichen bis zu dem Materialbahnauslauf 44 oder über diesen hinaus. Alternativ hat diese dann beispielsweise mindestens eine Unterbrechung zwischen dem Materialbahneinlauf, der ersten Materialrolle 5 bzw. der zweiten Materialrolle 8 und dem Materialbahnauslauf 44.

Die Kulissenführung 49 hat eine eingangsseitige erste Führungsvorrichtung 50, die an dem Grundgestell-Träger 13 fest angeordnet ist und dem ersten Haltearm 14 bzw. der ersten Materialrolle 5 zugeordnet ist. Die eingangsseitige erste Führungsvorrichtung 50 umfasst eine eingangsseitige gerade bzw. im Wesentlichen gerade erste Führungseinrichtung 51 und eingangsseitige im Wesentlichen gerade zweite Führungseinrichtung 52. Die eingangsseitige erste Führungseinrichtung 51 und die eingangsseitige zweite Führungseinrichtung 52 verlaufen im Wesentlichen schräg zueinander. Sie sind unbeweglich zueinander.

Die eingangsseitige erste Führungseinrichtung 51 hat benachbart zu der ersten Materialrolle 5 einen freien ersten Einzugseingang 53, der dem Grundgestell-Träger 13 abgewandt ist. Die eingangsseitige zweite Führungseinrichtung 52 hat benachbart zu der ersten Materialrolle 5 einen freien zweiten Einzugseingang 54, der dem Grundgestell-Träger 13 abgewandt und beabstandet zu dem ersten Einzugseingang 53 angeordnet ist. Der erste Einzugseingang 53 und der zweite Einzugseingang 54 sind in Umfangsrichtung um die erste Materialrolle 5 benachbart zu der ersten Materialrolle 5 bei einem Einzugsvorgang angeordnet.

Die eingangsseitige erste Führungseinrichtung 51 und die eingangsseitige zweite Führungseinrichtung 52 laufen von ihrem jeweiligen Einzugseingang 53 bzw. 54 in Richtung auf den Grundgestell-Träger 13 aufeinander zu und laufen bei einer ersten Vereinigungsstelle 55 der Kulissenführung 49 zusammen. Die eingangsseitige erste Führungsvorrichtung 50 ist im Wesentlichen V-förmig.

Stromabwärts zu der ersten Vereinigungsstelle 55 in Bezug auf eine Einzugsrichtung bzw. der Transportrichtung 37 der einzuziehenden Materialbahn 3, 4 hat die eingangsseitige erste Führungsvorrichtung 50 einen, unterhalb der Führung 24 angeordneten, gemeinsamen ersten Ausgang 56, der der Führung 24 zugewandt bzw. nach vertikal oben gerichtet ist. Der erste Ausgang 56 ist benachbart zu der ersten Zuführwalze 16 angeordnet.

Die Kulissenführung 49 umfasst außerdem eine an der ersten Vorbereitungseinrichtung 19 bzw. an deren Schlitten angeordnete erste Führungsbogeneinrichtung 57, deren Eingang 58 nach unten gewandt bzw. der ersten Materialrolle 5 zugewandt ist. Die erste Führungsbogeneinrichtung 57 läuft benachbart oben bzw. seitlich oben benachbart um die erste Transportwalze 27 im Wesentlichen halbkreisbogenförmig herum und weist ausgangsseitig einen ersten Umkehrbereich 57a auf, der oberhalb der Führung 24 oder bei einem oberen Bereich derselben ein nach oben offenes erstes Austrittsende 59 aufweist.

Oberhalb der Führung 24 ist an dem Grundgestell-Träger 13 eine im Wesentlichen geradlinige erste Führungseinrichtung 60 der Kulissenführung 49 angeordnet. Die im Wesentlichen geradlinige erste Führungseinrichtung 60 erstreckt sich benachbart zu der Führung 24 und verläuft im Wesentlichen von Höhe des ersten Zuführwalzen-Tragarms bis unten zu der ersten Anpresswalze 33. Stromaufwärts hat die im Wesentlichen geradlinige erste Führungseinrichtung 60 einen nach unten offenen ersten Anschluss 61.

An die im Wesentlichen geradlinige erste Führungseinrichtung 60 schließt sich gegenüberliegend zu dem ersten Anschluss 61 eine schräg verlaufende erste Führungseinrichtung 62 der Kulissenführung 49 an. Die schräg verlaufende erste Führungseinrichtung 62 erstreckt sich von der ersten Anpresswalze 33 in der Transportrichtung 37 von unten schräg nach oben in Richtung auf die zweite Anpresswalze 36 und schräg gegenüber der Führung 24. Sie endet oben benachbart zu der zweiten Anpresswalze 36.

Die Kulissenführung 49 hat außerdem eine eingangsseitige zweite Führungsvorrichtung 63, die im Wesentlichen identisch wie die eingangsseitige erste Führungsvorrichtung 50 ausgeführt ist und an dem Grundgestell-Träger 13 fest angeordnet ist. Die eingangsseitige zweite Führungsvorrichtung 63 ist dem zweiten Tragarm 15 bzw. der zweiten Materialrolle 8 zugeordnet. Sie umfasst eine eingangsseitige im Wesentlichen gerade erste Führungseinrichtung 64 und eine eingangsseitige im Wesentlichen gerade zweite Führungseinrichtung 65. Die eingangsseitige erste Führungseinrichtung 64 und eingangsseitige zweite Führungseinrichtung 65 der eingangsseitigen zweiten Führungsvorrichtung 63 verlaufen im Wesentlichen schräg zueinander. Sie sind unbeweglich zueinander.

Die eingangsseitige erste Führungseinrichtung 64 hat benachbart zu der zweiten Materialrolle 8 einen freien ersten Einzugseingang 66, der dem Grundgestell-Träger 13 abgewandt ist. Die eingangsseitige zweite Führungseinrichtung 65 hat benachbart zu der zweiten Materialrolle 8 einen freien zweiten Einzugseingang 67, der dem Grundgestell-Träger 13 abgewandt und beabstandet zu dem ersten Einzugseingang 66 angeordnet ist. Der erste Einzugseingang 66 und der zweite Einzugseingang 67 sind in Umfangsrichtung um die zweite Materialrolle 8 benachbart zu der zweiten Materialrolle 8 bei einem Einzugsvorgang angeordnet.

Die eine eingangsseitige erste Führungseinrichtung 64 und die eingangsseitige zweite Führungseinrichtung 65 laufen von ihrem jeweiligen Einzugseingang 66 bzw. 67 in Richtung auf den Grundgestell-Träger 13 aufeinander zu und laufen bei einer zweiten Vereinigungsstelle 68 der Kulissenführung 49 zusammen. Die eingangsseitige zweite Führungsvorrichtung 63 ist im Wesentlichen V-förmig.

Stromabwärts zu der zweiten Vereinigungsstelle 68 in Bezug auf eine Einzugsrichtung bzw. der Transportrichtung 37 der einzuziehenden Materialbahn 3, 7 hat die eingangsseitige zweite Führungsvorrichtung 63 einen, unterhalb der Führung 24 angeordneten, gemeinsamen zweiten Ausgang 69, der der Führung 24 zugewandt bzw. nach vertikal oben gerichtet ist. Der zweite Ausgang 69 ist benachbart zu der zweiten Zuführwalze 18 angeordnet.

Die Kulissenführung 49 umfasst außerdem eine an der zweiten Vorbereitungseinrichtung 20 bzw. an deren Schlitten angeordnete zweite Führungsbogeneinrichtung 70, deren zweiter Eingang nach unten gewandt bzw. der zweiten Materialrolle 8 zugewandt ist. Die zweite Führungsbogeneinrichtung 70 läuft benachbart oben bzw. seitlich oben benachbart um die zweite Transportwalze 28 im Wesentlichen halbkreisbogenförmig herum und weist ausgangsseitig einen zweiten Umkehrbereich 71 auf, der oberhalb der Führung 24 oder bei einem oberen Bereich derselben ein nach oben offenes zweites Austrittsende 72 aufweist. Die zweite Führungsbogeneinrichtung 70 ist bezüglich einer vertikalen Symmetrieebene symmetrisch zu der ersten Führungsbogeneinrichtung 57 ausgebildet ist.

Oberhalb der Führung 24 ist an dem Grundgestell-Träger 13 eine im Wesentlichen geradlinige zweite Führungseinrichtung 73 der Kulissenführung 49 angeordnet. Die im Wesentlichen geradlinige zweite Führungseinrichtung 73 erstreckt sich benachbart zu der Führung 24 und verläuft im Wesentlichen von Höhe des zweiten Zuführwalzen-Tragarms bis unten zu der zweiten Anpresswalze 36. Stromaufwärts hat die im Wesentlichen geradlinige zweite Führungseinrichtung 73 einen nach unten offenen zweiten Anschluss 74.

An die im Wesentlichen geradlinige zweite Führungseinrichtung 73 schließt sich gegenüberliegend zu dem zweiten Anschluss 74 eine im Wesentlichen halbkreisbogenförmige zweite Führungseinrichtung 75 der Kulissenführung 49 an. Die im Wesentlichen halbkreisbogenförmige zweite Führungseinrichtung 73 erstreckt sich benachbart bzw. seitlich benachbart zu der zweiten Anpresswalze 36 auf der der ersten Anpresswalze 33 zugewandten Seite.

Die schräg verlaufende erste Führungseinrichtung 62 und die im Wesentlichen halbkreisbogenförmige zweite Führungseinrichtung 75 laufen zusammen und vereinen sich bei einer dritten Vereinigungsstelle 76 oben benachbart bzw. seitlich zu der zweiten Anpresswalze 36.

An die dritte Vereinigungsstelle 76 schließt sich stromabwärts eine ausgangsseitige Führungseinrichtung 77 an, die gerade zu der Einfädel-Assistenzanordnung 38 verläuft und sich von oben benachbart bzw. seitlich benachbart zu einem zwischen den Förderwalzen 39, 40 ausgebildeten Förderspalt erstreckt. Die ausgangsseitige Führungseinrichtung 77 erstreckt sich dort benachbart bzw. seitlich benachbart zu den Förderwalzen 39, 40. Sie erstreckt sich im Wesentlichen viertelkreisbogenförmig um die erste Förderwalze 39 bzw. seitlich benachbart zu dieser und im Wesentlichen halbkreisbogenförmig um die zweite Förderwalze 40 bzw. seitlich benachbart zu dieser.

Die ausgangsseitige Führungseinrichtung 77 erstreckt sich außerdem benachbart bzw. seitlich benachbart um die erste Umlenkwalze 41 an dem Speicherwagen 42.

Die ausgangsseitige Führungseinrichtung 77 erstreckt sich außerdem benachbart bzw. seitlich benachbart im Wesentlichen halbkreisbogenförmig um die ortsfeste zweite Umlenkwalze 45.

Die ausgangsseitige Führungseinrichtung 77 erstreckt sich teilkreisbogenförmig benachbart bzw. seitlich benachbart um die dritte Umlenkwalze 46 an dem Speicherwagen 42.

Die ausgangsseitige Führungseinrichtung 77 erstreckt sich im Wesentlichen dreiviertelkreisbogenförmig benachbart bzw. seitlich benachbart um die ortsfeste vierte Umlenkwalze 47.

Die ausgangsseitige Führungseinrichtung 77 erstreckt sich im Wesentlichen dreiviertelkreisbogenförmig benachbart bzw. seitlich benachbart um die fünfte Umlenkwalze 48 an den Speicherwagen 42.

Die ausgangsseitige Führungseinrichtung 77 läuft über den Materialbahnauslauf 44 aus der Materialbahn-Spliceanordnung 1 hinaus.

Jede Führungseinrichtung 51, 52, 57, 60, 62, 64, 65, 70, 73, 75, 77 umfasst einander gegenüberliegende, paarweise angeordnete Führungselemente, die entsprechend identisch geformt und schienenartig bzw. kulissenartig sind. Die Führungselemente sind jeweils seitlich benachbart bzw. seitlich außen zu der einzuziehenden Materialbahn 3, 4, 7 angeordnet. Sie sind vorzugsweise in Querrichtung der Materialbahn 3, 4, 7 beabstandet zu der einzuziehenden Materialbahn 3, 4, 7 bzw. deren Längsrand angeordnet. Die Führungselemente sind zu der einzuziehenden Materialbahn 3, 4, 7 hin offen und im Querschnitt beispielsweise U-förmig.

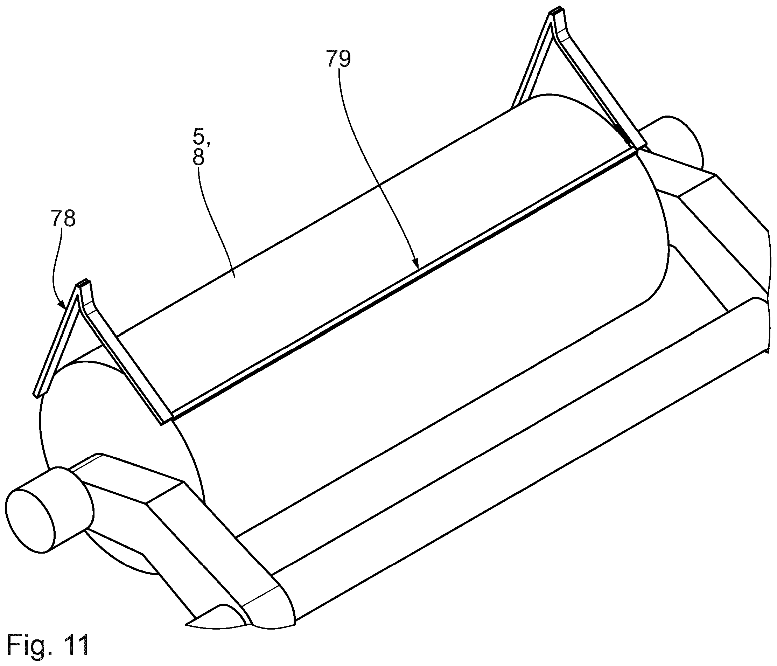

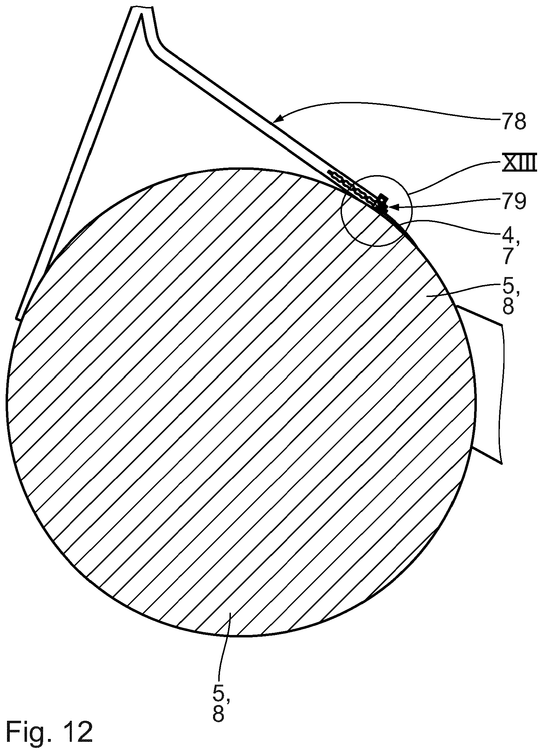

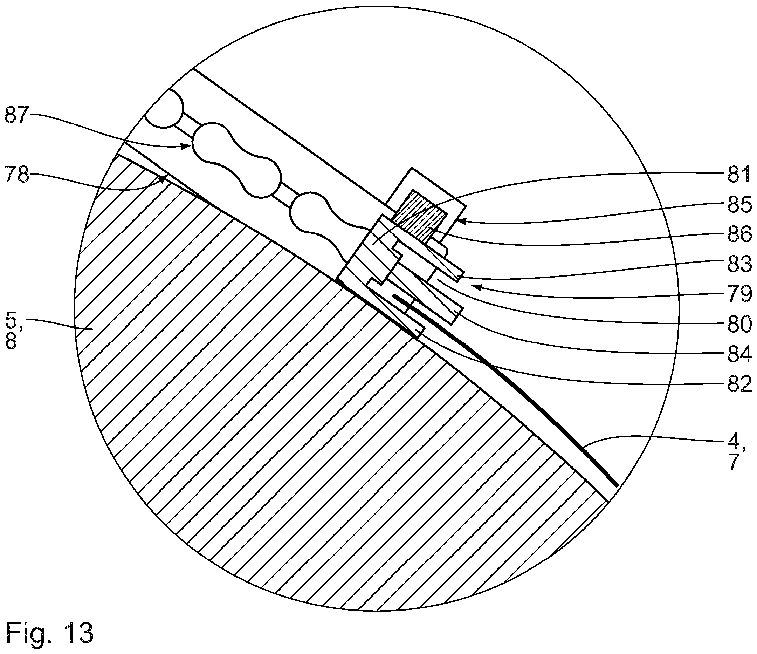

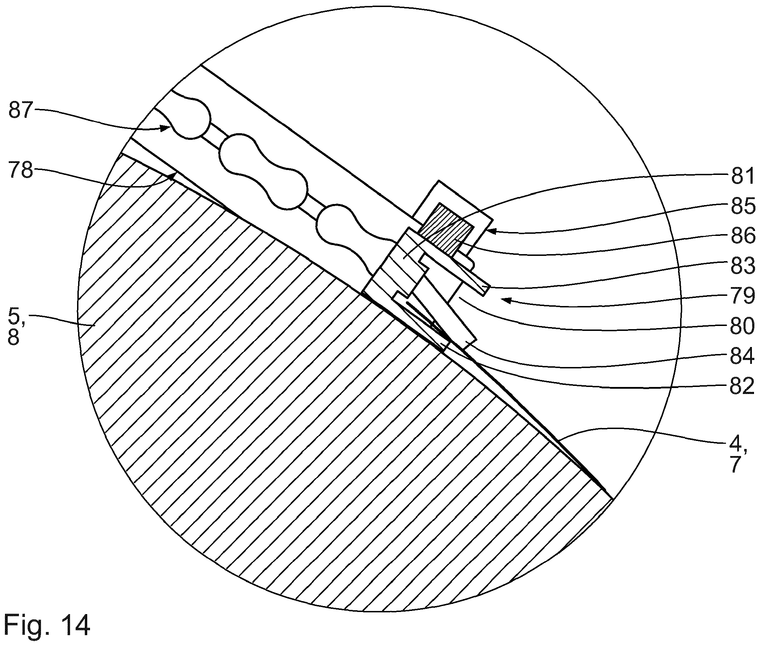

Die Materialbahn-Spliceanordnung 1 umfasst mindestens eine Materialbahn-Klemmeinrichtung 78 zum klemmenden Halten der einzuziehenden Materialbahn 3, 4, 7 (Fig. 11 bis 14).

Die Materialbahn-Klemmeinrichtung 78 hat einen profilartigen starren Querträger 79, der sich in der Querrichtung der einzuziehenden Materialbahn 3, 4, 7 erstreckt und in der Querrichtung der einzuziehenden Materialbahn 3, 4, 7 gegenüber dieser seitlich übersteht. Der Querträger 79 greift in einander gegenüberliegende Führungselemente ein und ist so senkrecht zu seiner Erstreckung verschiebbar geführt. Der Querträger 79 ist längs der Kulissenführung 49 verlagerbar und ist so imstande, in Abhängigkeit seiner Stellung translatorische und/oder bogenförmige Bewegungen oder dergleichen auszuführen. Er erstreckt sich senkrecht zwischen den einander gegenüberliegenden Führungselementen.

Der Querträger 79 hat eine Materialbahn-Aufnahmeöffnung 80, die entgegen der Einzugsrichtung bzw. Transportrichtung 37 offen ist. Er ist im Wesentlichen U-förmig. Der Querträger 79 weist eine der Materialbahn-Aufnahmeöffnung 80 gegenüberliegende Basis 81 und einen von der Basis 81 vorspringenden Haltesteg 82 sowie einen von der Basis 81 vorspringenden Außensteg 83 auf. Der Haltesteg 82 und Außensteg 83 verlaufen parallel und beabstandet zueinander.

Bei einem Einzugsvorgang wirkt der Haltesteg 82 mit der einzuziehenden Materialbahn 3, 4, 7 zusammen, während der Außensteg 83 beabstandet zu dieser angeordnet ist.

Der Querträger 79 lagert einen Klemmbalken 84, der zwischen dem Haltesteg 82 und dem Außensteg 83 angeordnet und gegenüber diesen verschwenkbar ist. Der Klemmbalken 84 steht von der Basis 81 ausgehend vorzugsweise gegenüber dem Haltesteg 82 und dem Außensteg 83 über.

Benachbart zu dem ersten und zweiten Einzugseingang 53 bzw. 54 der eingangsseitigen ersten Führungsvorrichtung 50 und benachbart zu dem ersten und zweiten Einzugseingang 66 bzw. 67 der eingangsseitigen zweiten Führungsvorrichtung 63 ist vorzugsweise an den einander gegenüberliegenden Führungselementen jeweils eine Aktivierungseinrichtung 85 angeordnet, die einen elektrischen Impulsempfänger 86 umfasst. Die Aktivierungseinrichtung 85 ist dem Klemmbalken 84 zugeordnet. Der Impulsempfänger 86 steht mit dem Klemmbalken 84 in Verbindung und ist imstande, diesen zu verschwenken.

An der Basis 81 sind gegenüberliegend zu dem Klemmbalken 84 zwei Kopplungsketten 87 angeordnet. Die Kopplungsketten 87 verlaufen in den einander gegenüberliegenden Führungselementen der Führungseinrichtungen 51, 52, 57, 60, 62, 64, 65, 70, 73, 75, 77 und sind motorisch verlagerbar. Die Kulissenführung 49, die Materialbahn-Klemmeinrichtung 78 und die Kopplungsketten 87 samt deren Verlagerungsantrieb/e sind Bestandteil einer Materialbahn-Einzugsvorrichtung.

Nachfolgend wird der Betrieb der Materialbahn-Spliceanordnung 1 beispielhaft beschrieben. Dabei wird von Fig. 1 ausgegangen. Bei Fig. 1 wird die endliche erste Materialbahn 4 von der ersten Materialrolle 5 abgerollt und so gefördert. Sie wurde in die Materialbahn-Spliceanordnung 1 mittels der Materialbahn-Einzugsvorrichtung unter Abrollen der endlichen ersten Materialbahn 4 von der ersten Materialrolle 5 eingezogen, was nachfolgend noch detailliert beschrieben wird.

Die endliche erste Materialbahn 4 wird über die erste Zuführwalze 16, wo die endliche erste Materialbahn 4 umgelenkt wird, zu der Schneide-Verbindungsvorrichtung 17 geführt. Sie wird zwischen den zueinander beabstandeten Anpresswalzen 33, 36 hindurchgeführt und liegt bereichsweise an diesen umfangsseitig an.

Stromabwärts der Schneide- und Verbindevorrichtung 17 wird die endliche erste Materialbahn 4 bzw. die endlose Materialbahn 3 von oben in die Einfädel-Assistenzanordnung 38 eingeführt und umschlingt deren beiden Förderwalzen 39, 40, wobei sie an den Förderwalzen 39, 40 anliegt. Die Einfädel-Assistenzanordnung 38 unterstützt günstigerweise den Transport der endlichen ersten Materialbahn 4 bzw. der endlosen Materialbahn 3 und ist entsprechend angetrieben.

Anschließend wird die endliche erste Materialbahn 4 bzw. die endlose Materialbahn 3 um die erste Umlenkwalze 41 an dem Speicherwagen 42 geführt. Anschließend wird die endliche erste Materialbahn 4 bzw. die endlose Materialbahn 3 um die ortsfeste zweite Umlenkwalze 45 geführt. Anschließend wird die endliche erste Materialbahn 4 bzw. die endlose Materialbahn 3 um die dritte Umlenkwalze 46 an dem Speicherwagen 42 geführt. Anschließend wird die endliche erste Materialbahn 4 bzw. die endlose Materialbahn 3 um die ortsfeste vierte Umlenkwalze 47 geführt. Anschließend wird die endliche erste Materialbahn 4 bzw. die endlose Materialbahn 3 um die fünfte Umlenkwalze 48 an dem Speicherwagen 42 geführt. Anschließend verlässt die endliche erste Materialbahn 4 bzw. die endlose Materialbahn 3 über den Materialbahnauslauf 44 die Materialbahn-Spliceanordnung 1.

Die endliche erste Materialbahn 4 bzw. die endlose Materialbahn 3 erstreckt sich größtenteils benachbart zu der Kulissenführung 49.

Der Speicherwagen 42 ist dabei benachbart zu dem Materialbahnauslauf 44 angeordnet. Die erste Unterdruckwalze 25 ist beabstandet zu der ersten Transportwalze 27 angeordnet. Die Tischeinrichtung 23 befindet sich benachbart zu den Verbindeeinrichtungen 21, 22. Sie ist beabstandet zu den Vorbereitungseinrichtungen 19, 20 angeordnet.

Die Schneide- und Verbindeeinrichtung 17 befindet sich in ihrem inaktiven Zustand. In diesem Zustand wird die endliche erste Materialbahn 4 bzw. die endlose Materialbahn 3 durch die Schneide- und Verbindevorrichtung 17 lediglich hindurchgeführt.

Bei Fig. 1 wurde die endliche zweite Materialbahn 7 mittels der Materialbahn-Einzugsvorrichtung in die Materialbahn-Spliceanordnung 1 unter Abrollen der endlichen zweiten Materialbahn 7 von der zweiten Materialrolle 8 eingezogen. Die Materialbahn-Spliceanordnung 1 hat die zweite Materialrolle 8 und auch die erste Materialrolle 5 nach Ausrichtung in ihrer Umfangsrichtung in einer exakten definierten Ausgangslage mittels der Materialrollen-Vorbereitungsanordnung 2 erhalten.

Zum Einziehen der endlichen zweiten Materialbahn 7 befindet sich der Klemmbalken 84 in seiner Klemmstellung und ist unter Beklemmung der endlichen zweiten Materialbahn 7 in Richtung auf den Materialbahn-Haltesteg 82 verschwenkt. Die einzuziehende endliche zweite Materialbahn 7 ist so zwischen dem Haltesteg 82 und dem Klemmbalken 84 angeordnet und klemmend gehalten. Sie durchsetzt die Materialbahn-Aufnahmeöffnung 80. Die Kopplungsketten 87 werden synchron motorisch eingezogen, so dass der Querträger 79 samt der fixierten endlichen zweiten Materialbahn 7 längs der Kulissenführung 49 bis zu der zweiten Vorbereitungseinrichtung 20 gezogen wird. Der Querträger 79 wird um die Transportwalze 28 herum gezogen, sodass dieser der zweiten Unterdruckwalze 26 zugewandt ist. Die endliche zweite Materialbahn 7 tritt aufgrund der Abwickelrichtung der zweiten Materialrolle 8 über den freien zweiten Einzugseingang 67 in die Kulissenführung 49 ein.

Der zweite Ausgang 69 der eingangsseitigen zweiten Führungsvorrichtung 63 und der zweite Eingang der zweiten Führungsbogeneinrichtung 70 sind benachbart zueinander angeordnet, sodass die endliche zweite Materialbahn 7 bei dem Einzugsvorgang imstande ist, von der eingangsseitigen zweiten Führungsvorrichtung 63 in die zweite Führungsbogeneinrichtung 70 zu gelangen. Das zweite Austrittsende 72 der zweiten Führungsbogeneinrichtung 70 und der zweite Anschluss 74 der im Wesentlichen geradlinigen zweiten Führungseinrichtung 73 sind benachbart zueinander angeordnet, sodass die endliche zweite Materialbahn 7 bei dem Einzugsvorgang imstande ist, von der zweiten Führungsbogeneinrichtung 70 in die im Wesentlichen geradlinige zweite Führungseinrichtung 73 zu gelangen. Die zweite Vorbereitungseinrichtung 20 samt der zweiten Führungsbogeneinrichtung 70 sind dazu entsprechend längs der Führung 24 verlagert worden.

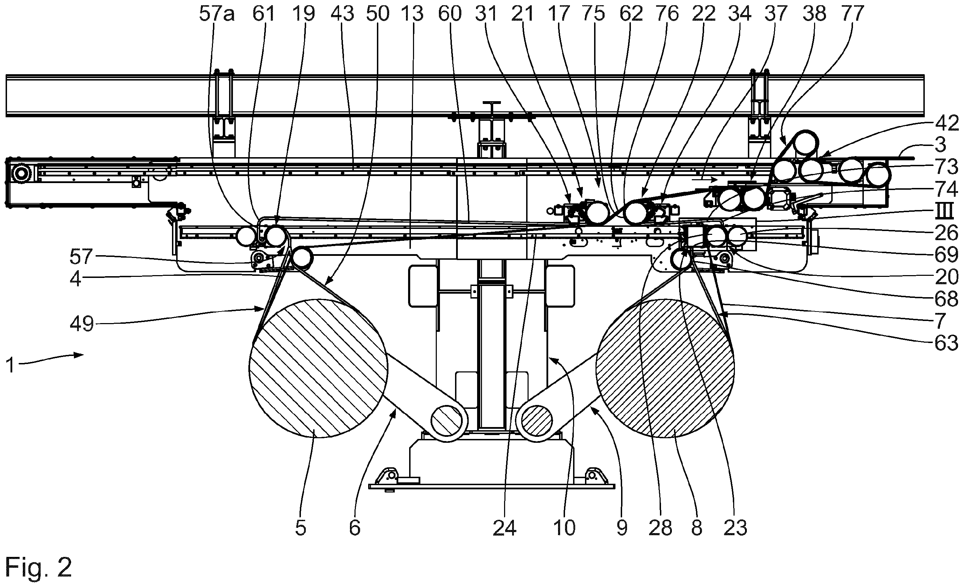

Wie Fig. 2 veranschaulicht, fährt für einen Splicevorgang die Tischeinrichtung 23 anschließend entlang der Führung 24 zu der zweiten Vorbereitungseinrichtung 20. Wenn die zweite Vorbereitungseinrichtung 20 und die Tischeinrichtung 23 benachbart zueinander angeordnet sind, wird die eingefädelte endliche zweite Materialbahn 7 zwischen der zweiten Vorbereitungseinrichtung 20 und der Tischeinrichtung 23 klemmend gehalten. Insbesondere wird die endliche zweite Materialbahn 7 zwischen der zweiten Transportwalze 28 und einem Halteelement 88 der Tischeinrichtung 23 unter Verformung desselben gehalten. Die Tischeinrichtung 23 und die zweite Vorbereitungseinrichtung 20 nehmen eine Haltestellung ein.

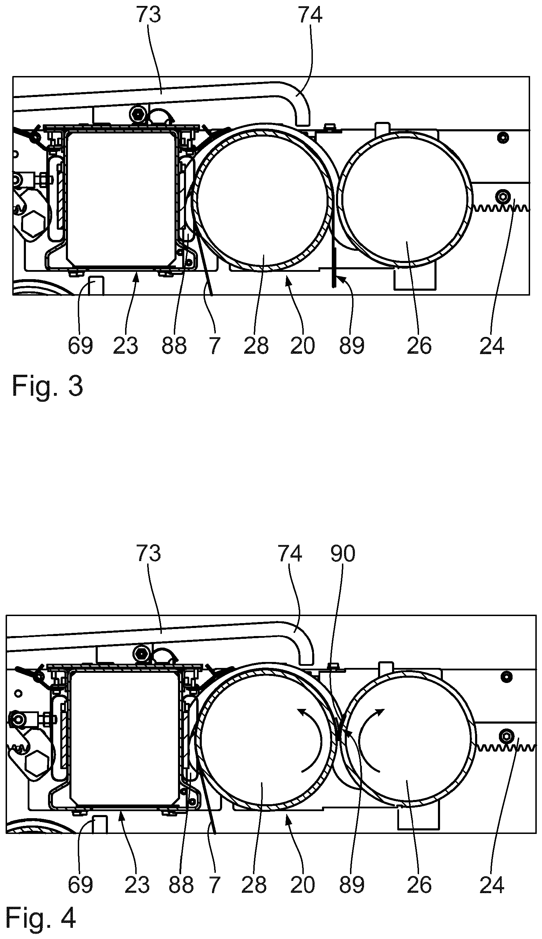

Anschließend fährt die Tischeinrichtung 23 längs der Führung 24 an die zweite Vorbereitungseinrichtung 20. Die Tischeinrichtung 23 und die zweite Vorbereitungseinrichtung 20 samt zweiter Führungsbogeneinrichtung 70 fahren längs der Führung 24 gemeinsam in Richtung auf die zweite Unterdruckwalze 26, die wiederum in Richtung auf die zweite Vorbereitungseinrichtung 20 fährt. Wenn die zweite Transportwalze 28 und die zweite Unterdruckwalze 26 benachbart zueinander angeordnet sind, sind der zweite Ausgang 69 der eingangsseitigen zweiten Führungsvorrichtung 63 und der zweite Eingang der zweiten Führungsbogeneinrichtung 70 voneinander getrennt bzw. beabstandet zueinander angeordnet. Das zweite Austrittsende 72 der zweiten Führungsbogeneinrichtung 70 und der zweite Anschluss 74 der im Wesentlichen geradlinigen zweiten Führungseinrichtung 73 sind voneinander getrennt bzw. beabstandet zueinander angeordnet (Fig. 3).

Die zweite Transportwalze 28 und die zweite Unterdruckwalze 26 werden dann derart gegensinnig drehangetrieben, dass die endliche zweite Materialbahn 7 entgegen ihrer eigentlichen Einzugsrichtung zurückgefördert wird und ein an der endlichen zweiten Materialbahn 7 endseitig angeordnetes, doppelseitig klebendes Splicestück 89 zwischen einen durch die zweite Transportwalze 28 und die zweite Unterdruckwalze 26 ausgebildeten Spalt gelangt. Das Splicestück 89 steht mit einer inneren Klebefläche mit der endlichen zweiten Materialbahn 7 in klebender Verbindung. Das Splicestück 89 ist dabei mit seiner lösbaren nicht-klebenden Trennabdeckung 90 der zweiten Unterdruckwalze 26 zugewandt und liegt mit der Trennabdeckung 90 an dieser an. Die zweite Unterdruckwalze 26 ist aktiv und saugt so durch ihren erzeugten Unterdruck die Trennabdeckung 90 des Splicestücks 89 an und entfernt so dieses von dem eigentlichen Splicestück 89 unter Freilegen einer der inneren Klebefläche gegenüberliegenden äußeren Klebefläche des Splicestücks 89. Die zweite Transportwalze 28 und zweite Unterdruckwalze 26 sind Bestandteil einer Trennabdeckungs-Entfernungsvorrichtung.

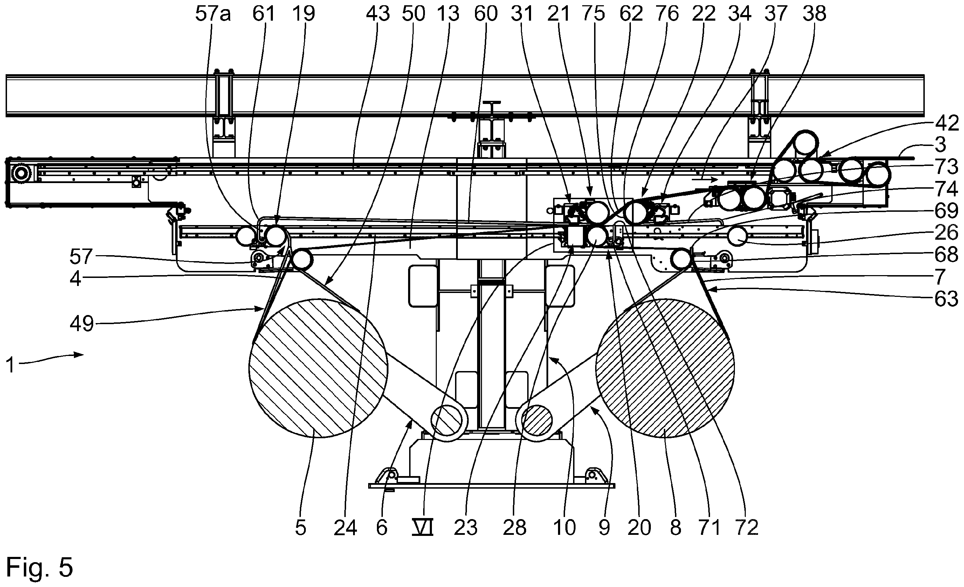

Die zweite Vorbereitungseinrichtung 20 und die Tischeinrichtung 23 fahren dann in gekoppeltem Zustand entlang der Führung 24 in Richtung auf die erste Vorbereitungseinrichtung 19 bzw. zu der ersten Verbindeeinrichtung 21, wobei die endliche zweite Materialbahn 7 klemmend zwischen der Tischeinrichtung 23 und der zweiten Transportwalze 28 gehalten ist. Die zweite Vorbereitungseinrichtung 20 und die Tischeinrichtung 23 entfernen sich von der zweiten Unterdruckwalze 26 (Fig. 5). Die zweite Transportwalze 28 ist in ihrer Drehung blockiert.

Die zweite Transportwalze 28 wird dann in ihrer Drehung wieder freigegeben. Insbesondere durch die Verlagerung der Tischeinrichtung 23 und der zweiten Transportwalze 28 als Einheit wird die zweite Transportwalze 28 derart verschwenkt, dass das Splicestück 89 in eine nach oben gewandte Spliceposition gelangt.

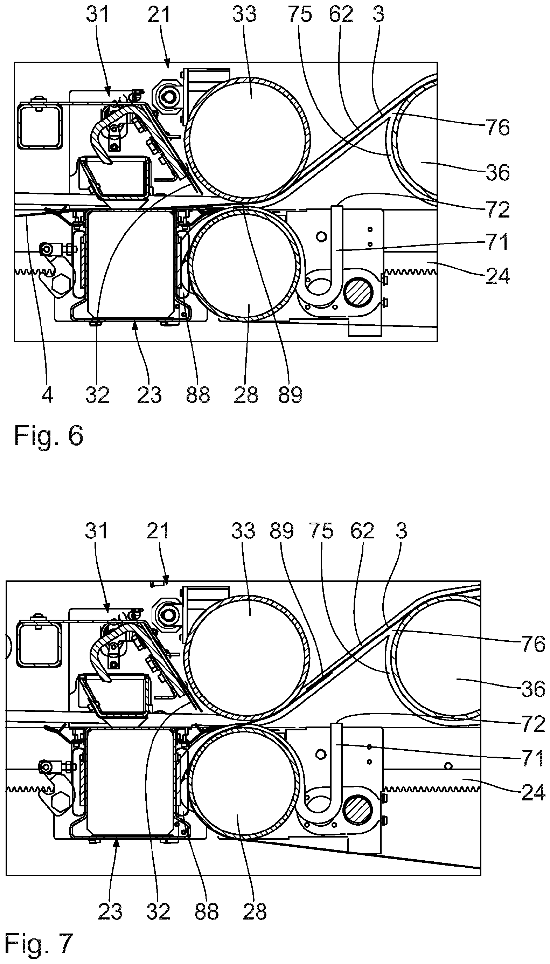

Wie Fig. 5, 6 zeigen, wird die zweite Transportwalze 28 unter die erste Verbindeeinrichtung 21 gefahren, so dass das Splicestück 89 der ersten Verbindeeinrichtung 21 zugewandt ist. Die endlose Materialbahn 3 bzw. endliche erste Materialbahn 4 wird mittels Verlagerung der ersten Anpresswalze 33 der ersten Verbindeeinrichtung 21 gegen das klebende Splicestück 89 gepresst, das der ersten Anpresswalze 33 zugewandt ist. Dadurch erfolgt ein klebendes Verbinden der endlosen Materialbahn 3 bzw. endlichen ersten Materialbahn 4 mit der endlichen zweiten Materialbahn 7. Die Zufuhr der endlichen ersten Materialbahn 4 zu der endlosen Materialbahn 3 wird gestoppt. Mittels des ersten Schnittmessers 32 wird die endliche erste Materialbahn 4 von der endlosen Materialbahn 3 getrennt.

Durch Verlagern des Speicherwagens 42 weg von dem Materialbahnauslauf 44 werden die von der endlosen Materialbahn 3 gebildeten Schleifen aufgelöst, damit die endlose Materialbahn 3 weiterhin die Materialbahn-Spliceanordnung 1 ohne Unterbrechung bleibt bzw. ohne Unterbrechung gefördert wird.

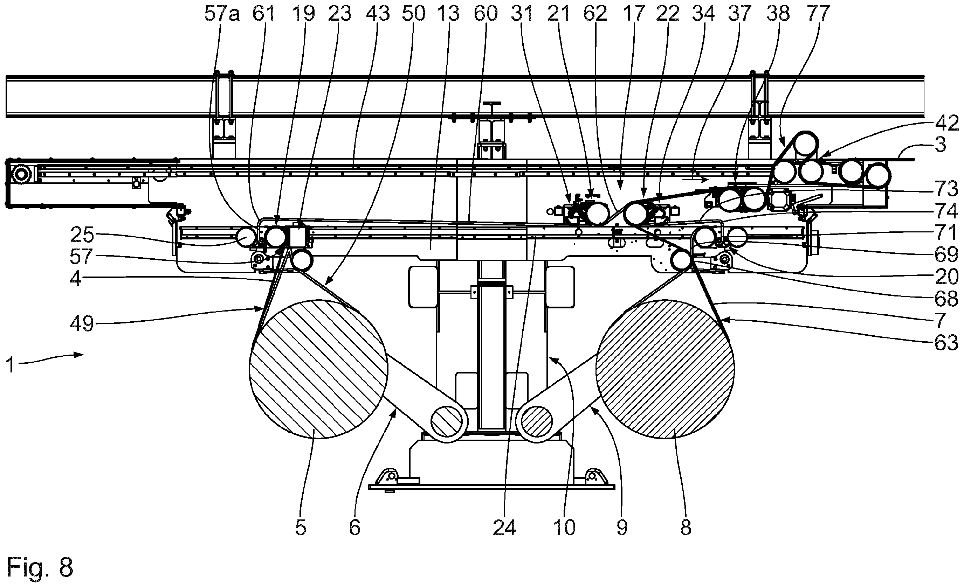

Bei Fig. 8 wird nun die endliche zweite Materialbahn 7 von der zweiten Materialrolle 8 abgerollt. Die erste Materialrolle 5 wird nun analog der vorherigen Beschreibung für ihr späteres Abrollen vorbereitet. Der Einzug der endlichen ersten Materialbahn 4 in die Materialbahn-Spliceanordnung 1 erfolgt im Wesentlichen analog mit der Materialbahn-Einzugsvorrichtung.

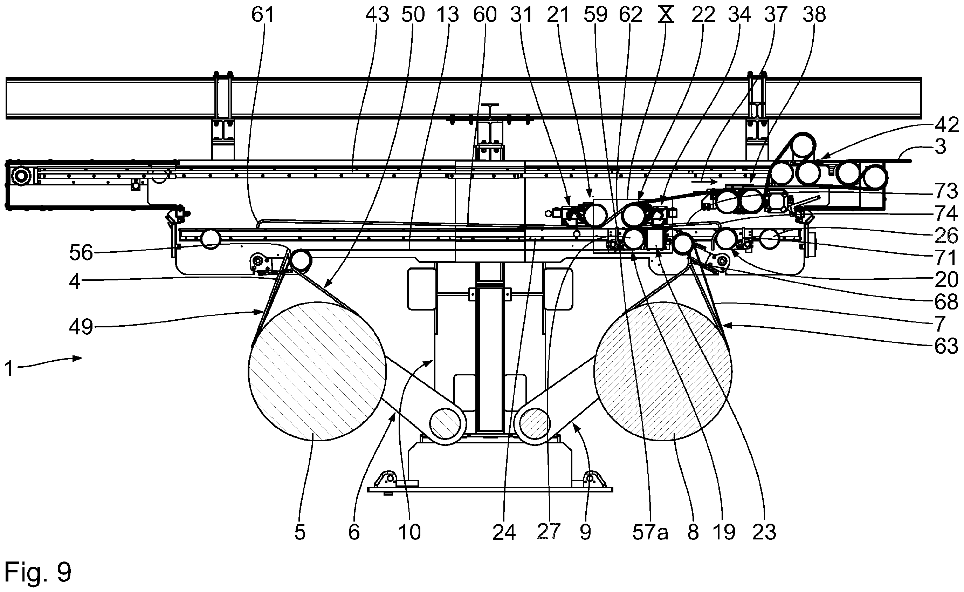

Wie Fig. 9 zeigt, wird für einen Splicevorgang im Wesentlichen analog zu der vorherigen Beschreibung ein an der endlichen ersten Materialbahn 4 angeordnetes Splicestück 89 mit der endlosen Materialbahn 3 bzw. endlichen zweiten Materialbahn 7 klebend verbunden, so dass die endliche erste Materialbahn 4 mit der endlosen Materialbahn 3 klebend verbunden ist. Die Zufuhr der endlichen zweiten Materialbahn 7 wird nun gestoppt.

Der erste Ausgang 56 der eingangsseitigen ersten Führungsvorrichtung 50 und der erste Eingang 58 der ersten Führungsbogeneinrichtung 57 sind benachbart zueinander angeordnet, sodass die endliche erste Materialbahn 4 bei dem Einzugsvorgang imstande ist, von der eingangsseitigen ersten Führungsvorrichtung 50 in die erste Führungsbogeneinrichtung 57 zu gelangen. Das erste Austrittsende 59 der ersten Führungsbogeneinrichtung 57 und der erste Anschluss 61 der im Wesentlichen geradlinigen ersten Führungseinrichtung 60 sind benachbart zueinander angeordnet, sodass die endliche erste Materialbahn 7 bei dem Einzugsvorgang imstande ist, von der ersten Führungsbogeneinrichtung 57 in die im Wesentlichen geradlinige erste Führungseinrichtung 60 zu gelangen. Die erste Vorbereitungseinrichtung 20 samt der ersten Führungsbogeneinrichtung 57 sind dazu entsprechend längs der Führung 24 verlagert worden.

Wenn sich die Materialbahn-Spliceanordnung 1 bereits im Betrieb befindet und eine Materialbahn 3, 4 bzw. abgerollt bzw. gefördert wird, wird die neue endliche Materialbahn 4 bzw. 7 über die Materialbahn-Einzugsvorrichtung wie beschrieben lediglich bis zu der jeweiligen Transportwalze 27 bzw. 28 geführt.

Wenn sich in der Materialbahn-Spliceanordnung 1 dagegen noch gar keine Materialbahn befindet, ist mittels der Materialbahn-Einzugsvorrichtung die jeweilige endliche Materialbahn 4 bzw. 7 vollständig in die Materialbahn-Spliceanordnung 1 bis zu deren Materialbahnauslauf 44 bzw. bis in eine benachbart angeordnete Produktionsanordnung bzw. -vorrichtung einziehbar.

Der erste Ausgang 56 der eingangsseitigen ersten Führungsvorrichtung 50 und der erste Eingang 58 der ersten Führungsbogeneinrichtung 57 sind dann benachbart zueinander angeordnet, sodass die endliche erste Materialbahn 4 bei dem Einzugsvorgang imstande ist, von der eingangsseitigen ersten Führungsvorrichtung 50 in die erste Führungsbogeneinrichtung 57 zu gelangen. Das erste Austrittsende 59 der ersten Führungsbogeneinrichtung 57 und der erste Anschluss 61 der im Wesentlichen geradlinigen ersten Führungseinrichtung 60 sind benachbart zueinander angeordnet, sodass die endliche erste Materialbahn 7 bei dem Einzugsvorgang imstande ist, von der ersten Führungsbogeneinrichtung 57 in die im Wesentlichen geradlinige erste Führungseinrichtung 60 zu gelangen. Die erste Vorbereitungseinrichtung 20 samt der ersten Führungsbogeneinrichtung 57 sind dazu entsprechend längs der Führung 24 verlagert worden. Alternativ sind der zweite Ausgang 69 der eingangsseitigen zweiten Führungsvorrichtung 63 und der zweite Eingang der zweiten Führungsbogeneinrichtung 70 benachbart zueinander angeordnet, sodass die endliche zweite Materialbahn 7 bei dem Einzugsvorgang imstande ist, von der eingangsseitigen zweiten Führungsvorrichtung 63 in die zweite Führungsbogeneinrichtung 70 zu gelangen. Das zweite Austrittsende 72 der zweiten Führungsbogeneinrichtung 70 und der zweite Anschluss 74 der im Wesentlichen geradlinigen zweiten Führungseinrichtung 73 sind benachbart zueinander angeordnet, sodass die endliche zweite Materialbahn 7 bei dem Einzugsvorgang imstande ist, von der zweiten Führungsbogeneinrichtung 70 in die im Wesentlichen geradlinige zweite Führungseinrichtung 73 zu gelangen. Die zweite Vorbereitungseinrichtung 20 samt der zweiten Führungsbogeneinrichtung 70 sind dazu entsprechend längs der Führung 24 verlagert worden.

Die Kopplungsketten 87 werden synchron motorisch eingezogen, so dass der Querträger 79 samt der fixierten endlichen zweiten Materialbahn 7 längs der Kulissenführung 49 bis zu dem Materialbahnauslauf 44 bzw. über diesen hinaus gezogen wird.

Die Materialbahn-Klemmeinrichtung 78 wird vorzugsweise automatisiert bzw. motorisch in ihre Anfangsstellung zur Aufnahme der jeweiligen endlichen Materialbahn 4 bzw. 7 verlagert. Zur Aufnahme der jeweiligen endlichen Materialbahn 4 bzw. 7 untergreift der Haltesteg 82 die jeweilige endliche Materialbahn 4 bzw. 7. Dafür ist ein freier, aufzunehmender Abschnitt der jeweiligen endlichen Materialbahn 4 bzw. 7 beabstandet zu darunter angeordneten Materialbahnabschnitten der jeweiligen Materialrolle 5 bzw. 8 angeordnet. Die Materialbahn 4, 7 durchsetzt die Materialbahn-Aufnahmeöffnung 80.

Bei Erreichen einer korrekten Position des Querträgers 79 in Bezug auf die endliche Materialbahn 4, 7 bzw. deren Ende liefert das Materialbahn-Detektionselement ein entsprechendes elektrisches Auslösesignal, das eine, vorzugsweise motorische, Verlagerung des Klemmbalkens 84 in seine Klemmstellung bewirkt. Die korrekte Position des Querträgers 79 in Bezug auf die endliche Materialbahn 4, 7 bzw. deren Ende ist vorzugsweise erreichbar, da die Materialbahn-Spliceanordnung 1 die Materialrolle 5, 8 in ausgerichteter bzw. exakt definierter Ausgangslage erhält und so schon weiß, wo sich das Ende der jeweiligen Materialbahn 4, 7 an der Materialrolle 5, 8 befindet. Anschließend wird der Querträger 79 mittels der Kopplungsketten 87 in seine gewünschte Stellung unter Einzug der jeweiligen endlichen Materialbahn 4 bzw. 7 verlagert. Eine völlig automatisierte Aufnahme der Materialrolle 5, 8 ist möglich. Ebenso ein völlig automatisierter Einzug der Materialbahn 4, 7.

Die Ansteuerung bzw. Betätigung der einzelnen Einheiten, wie Vorbereitungseinrichtungen 19, 20, Verbindeeinrichtungen 21, 22, Materialbahn-Einzugsvorrichtung und/oder Trennabdeckungs-Entfernungsvorrichtung, erfolgt vorzugsweise durch mindestens eine entsprechende elektrische bzw. elektronische Betätigungs- bzw. Steuereinheit.

Die endlose Materialbahn 3 wird zusammen mit einer weiteren endlosen Materialbahn einer Wellpappe-Produktionsvorrichtung zur Herstellung einer einseitig kaschierten Wellpappebahn zugeführt. Diese umfasst zum Erzeugen einer eine Wellung aufweisenden Wellbahn aus einer der endlosen Materiabahnen eine Riffeleinrichtung mit Walzen. Zum Verbinden der Wellbahn mit einer Glattbahn aus der anderen endlosen Materialbahn weist die Wellpappe-Produktionsvorrichtung eine Leim-Auftragseinrichtung auf, die Leim auf Spitzen der Wellung der Wellbahn aufträgt. Zum Anpressen der Glattbahn gegen die mit Leim versehene Wellbahn hat die Wellpappe-Produktionsvorrichtung ein Anpressmodul, wobei die einseitig kaschierte Wellpappebahn aus der Wellbahn und Glattbahn entsteht. Eine umgekehrte Verwendung der Materialbahnen ist alternativ möglich.

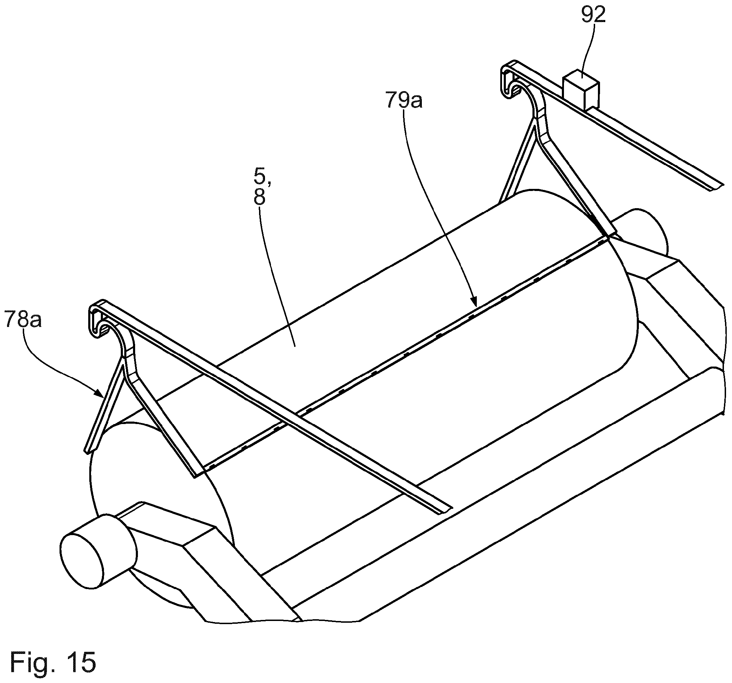

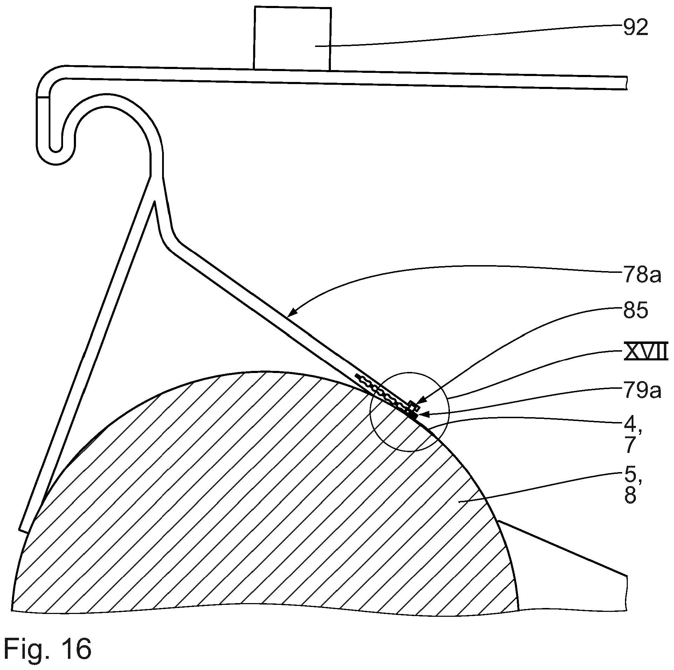

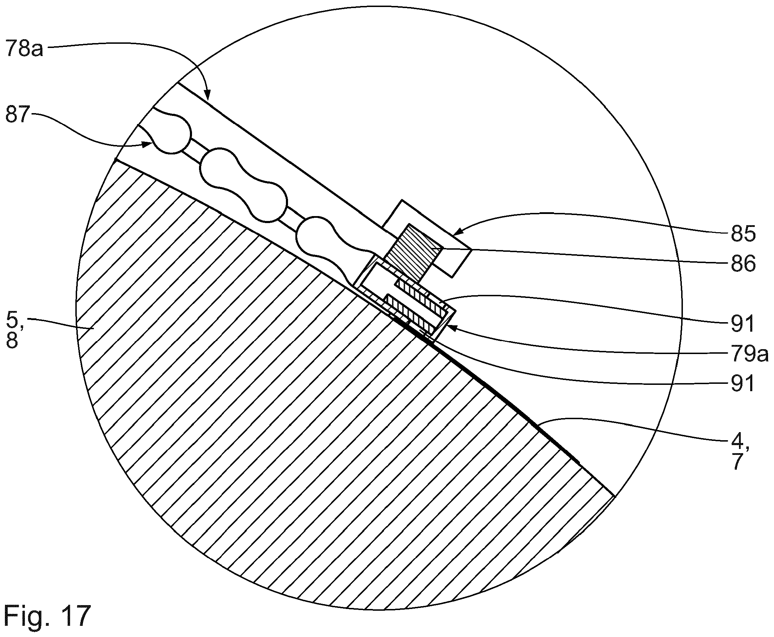

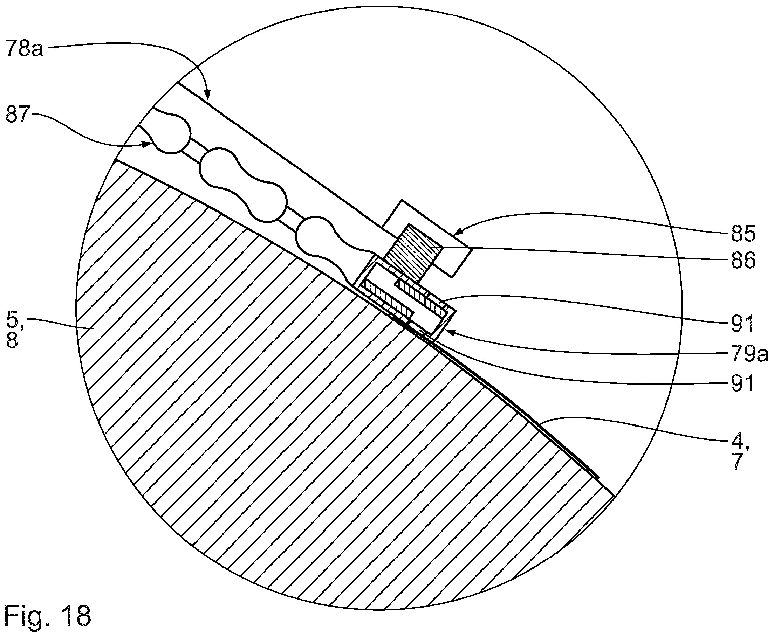

Nachfolgend wird unter Bezugnahme auf die Fig. 15 bis 18 eine zweite Ausführungsform der Materialbahn-Halteeinrichtung beschrieben. Identische Teile erhalten dieselben Bezugszeichen wie bei der vorherigen Ausführungsform, auf deren Beschreibung hiermit explizit verwiesen wird. Konstruktiv unterschiedliche, jedoch funktionell identische Teile erhalten dieselben Bezugszeichen mit einem nachgeordneten "a".

Im Vergleich mit der vorherigen Ausführungsform ist hier die Materialbahn-Halteeinrichtung nicht als Materialbahn-Klemmeinrichtung 78, sondern als Materialbahn-Ansaugeinrichtung 78a ausgeführt. Die Materialbahn-Ansaugeinrichtung 78a hat einen Querträger 79a, der im Wesentlichen einen Innenraum umschließt und beispielsweise als rechteckiger Profilkörper ausgeführt ist. In dem Querträger 79a sind einander gegenüberliegende Strömungsöffnungen 91 ausgebildet.

Der Querträger 79a steht mit einer Ansaugquelle 92 in Strömungsverbindung. In aktivem Zustand der Ansaugquelle 92 ist die einzuziehende Materialbahn 4, 7 an den Querträger 79a angesaugt und liegt an diesem im Bereich der der einzuziehenden Materialbahn 4, 7 benachbarten Strömungsöffnungen 91 fest an.

Die Funktion der Materialbahn-Ansaugeinrichtung 78a bzw. der entsprechenden Materialbahn-Einzugsvorrichtung ist im Wesentlichen analog wie bei der Materialbahn-Klemmeinrichtung 78.

Die hier verwendeten Ausdrücke "stromaufwärts", "stromabwärts", "eingangsseitig", "ausgangsseitig" oder dergleichen beziehen sich insbesondere auf eine Förderrichtung einer zugehörigen Materialbahn.

## Patentansprüche

1. Materialbahn-Be-/Verarbeitungsanordnung, insbesondere Materialbahn-Abgabeanordnung, insbesondere Materialbahn-Abrollanordnung, insbesondere Materialbahn-Spliceanordnung,
a) mit mindestens einer Materialbahn-Einzugsvorrichtung zum Einziehen einer Materialbahn (3, 4, 7), umfassend
i) mindestens eine Materialbahn-Halteeinrichtung (78; 78a) zum Halten der einzuziehenden Materialbahn (3, 4, 7),
ii) mindestens eine Führung (49) zum Führen der mindestens einen Materialbahn-Halteeinrichtung (78; 78a) von mindestens einer Materialbahn-Einzugsstelle zu mindestens einer Materialbahn-Übergabestelle, und
iii) mindestens einen mit der mindestens einen Materialbahn-Halteeinrichtung (78; 78a) in Verbindung stehenden Einzugsantrieb zum Verlagern der mindestens einen Materialbahn-Halteeinrichtung (78; 78a) entlang der mindestens einen Führung (49) unter Einzug der einzuziehenden Materialbahn (3, 4, 7) in Richtung auf die mindestens eine Materialbahn-Übergabestelle,
**dadurch gekennzeichnet, dass**
b) die mindestens eine Führung (49) mindestens eine verlagerbare Führungseinrichtung (57, 70) umfasst.

2. Materialbahn-Be-/Verarbeitungsanordnung nach Anspruch 1, **dadurch gekennzeichnet, dass** die mindestens eine Führung (49) einen Materialbahneingang für die Materialbahn-Be-/Verarbeitungsanordnung ausbildet.

3. Materialbahn-Be-/Verarbeitungsanordnung nach Anspruch 1 oder 2, **dadurch gekennzeichnet, dass** die mindestens eine Führung (49) in der Materialbahn-Be-/Verarbeitungsanordnung in Richtung auf einen Auslauf (44) der Materialbahn-Be-/Verarbeitungsanordnung verläuft.

4. Materialbahn-Be-/Verarbeitungsanordnung nach einem der vorherigen Ansprüche, **dadurch gekennzeichnet, dass** die mindestens eine Führung (49) für die Vorbereitung einer zu be-/verarbeitenden Materialbahn (3, 4, 7) zumindest zwischen der mindestens einen Materialbahn-Einzugsstelle und einer Vorbereitungseinrichtung (19, 20) verläuft.

5. Materialbahn-Be-/Verarbeitungsanordnung nach einem der vorherigen Ansprüche, **dadurch gekennzeichnet, dass** bei einem neuen Einführen einer Materialbahn (3, 4, 7) in die Materialbahn-Be-/Verarbeitungsanordnung die mindestens eine Führung (49) zum Führen dieser Materialbahn (3, 4, 7) im Wesentlichen unterbrechungsfrei von einem Eingang zu einem Auslauf (44) der Materialbahn-Be-/Verarbeitungsanordnung verläuft.

6. Materialbahn-Be-/Verarbeitungsanordnung nach einem der vorherigen Ansprüche, **dadurch gekennzeichnet, dass** zwischen deren ersten Verbindeeinrichtung (21) und zweiten Verbindeeinrichtung (22) zum Verbinden eines Endes einer endlichen Materialbahn (4, 7) mit einem Anfang einer weiteren endlichen Materialbahn (7, 4) die mindestens eine Führung (49) verläuft.

7. Materialbahn-Be-/Verarbeitungsanordnung nach einem der vorherigen Ansprüche, **dadurch gekennzeichnet, dass** die mindestens eine Führung (49) mindestens eine gerade, im Wesentlichen gerade und/oder gekrümmte Führungseinrichtung (51, 52, 60, 62, 64, 65, 70, 73, 75, 77) umfasst.

8. Materialbahn-Be-/Verarbeitungsanordnung nach einem der vorherigen Ansprüche, **dadurch gekennzeichnet, dass** die mindestens eine Führung (49) mindestens eine in Bezug auf die Materialbahn-Be-/Verarbeitungsanordnung ortsfest angeordnete Führungseinrichtung (51, 52, 60, 62, 64, 65, 73, 75, 77) umfasst.

9. Materialbahn-Be-/Verarbeitungsanordnung nach einem der vorherigen Ansprüche, **dadurch gekennzeichnet, dass** eine die einzuziehende Materialbahn (4, 7) tragende Materialrolle (5, 8) automatisiert aufnehmbar ist.

## Claims

1. Material web working/processing arrangement, in particular material web dispensing arrangement, in particular material web unrolling arrangement, in particular material web splicing arrangement,
a) having at least one material web drawing-in apparatus for drawing in a material web (3, 4, 7), comprising
i) at least one material web holding device (78; 78a) for holding the material web (3, 4, 7) to be drawn in,
ii) at least one guide (49) for guiding the at least one material web holding device (78; 78a) from at least one material web drawing-in point to at least one material web transfer point, and
iii) at least one drawing-in drive which is in connection with the at least one material web holding device (78; 78a) and which serves for displacing the at least one material web holding device (78; 78a) along the at least one guide (49) upon drawing in the material web (3, 4, 7) to be drawn in in direction of the at least one material web transfer point,
**characterized in that**
b) the at least one guide (49) comprises at least one displaceable guide device (57, 70).

2. Material web working/processing arrangement according to claim 1, **characterized in that** the at least one guide (49) forms a material web entrance for the material web working/processing arrangement.

3. Material web working/processing arrangement according to claim 1 or 2, **characterized in that** the at least one guide (49) runs in the material web working/processing arrangement in the direction of an exit (44) of the material web working/processing arrangement.

4. Material web working/processing arrangement according to any one of the preceding claims, **characterized in that** the at least one guide (49) runs, for purposes of preparing a material web (3, 4, 7) to be worked/processed, at least between the at least one material web drawing-in point and a preparation device (19, 20).

5. Material web working/processing arrangement according to any one of the preceding claims, **characterized in that** upon new introduction of a material web (3, 4, 7) into the material web working/processing arrangement, the at least one guide (49) for guiding said material web (3, 4, 7) runs substantially uninterruptible from an entrance to an exit (44) of the material web working/processing arrangement.

6. Material web working/processing arrangement according to any one of the preceding claims, **characterized in that the** at least one guide (49) runs between its first connecting device (21) and second connecting device (22), for connecting an end of a finite material web (4, 7) to a start of a further finite material web (7, 4).

7. Material web working/processing arrangement according to any one of the preceding claims, **characterized in that** the at least one guide (49) comprises at least one straight, substantially straight and/or curved guide means (51, 52, 60, 62, 64, 65, 70, 73, 75, 77).

8. Material web working/processing arrangement according to any one of the preceding claims, **characterized in that** the at least one guide (49) comprises at least one guide device (51, 52, 60, 62, 64, 65, 73, 75, 77) which is arranged in a spatially fixed manner in relation to the material web working/processing arrangement.

9. Material web working/processing arrangement according to any one of the preceding claims, **characterized in that** a material roll (5, 8) carrying the material web (4, 7) to be drawn in is receivable in automated fashion.

## Revendications

1. Dispositif de travail/traitement de bande de matériau, en particulier un dispositif de distribution de bande de matériau, en particulier un dispositif de déroulement de bande de matériau, en particulier un dispositif d'épissure de bande de matériau,
a) avec au moins un dispositif de rétraction de bande de matériau pour rétracter une bande de matériau (3, 4, 7), comprenant
i) au moins un dispositif de maintien de bande de matériau (78 ; 78a) pour maintenir la bande de matériau (3, 4, 7) à rétracter,
ii) au moins un guide (49) pour guider l'au moins un dispositif de maintien de bande de matériau (78 ; 78a) d'au moins un point de rétraction de bande de matériau à au moins un point de transfert de bande de matériau, et
iii) au moins un entraînement de rétraction en liaison avec ledit au moins un dispositif de maintien de bande de matériau (78 ; 78a) pour déplacer ledit au moins un dispositif de maintien de bande de matériau (78 ; 78a) le long dudit au moins un guide (49) en rétractant la bande de matériau (3, 4, 7) à rétracter en direction dudit au moins un point de transfert de bande de matériau,
**caractérisé en ce que**
b) ledit au moins un guide (49) comprend au moins un dispositif de guidage déplaçable (57, 70).

2. Dispositif de travail/traitement de bande de matériau selon la revendication 1, **caractérisé en ce que** ledit au moins un guide (49) forme une entrée de bande de matériau pour le dispositif de travail/traitement de bande de matériau.

3. Dispositif de travail/traitement de bande de matériau selon la revendication 1 ou 2, **caractérisé en ce que** ledit au moins un guide (49) dans le dispositif de travail/traitement de bande de matériau s'étend en direction d'une sortie (44) du dispositif de travail/traitement de bande de matériau.

4. Dispositif de travail/traitement de bande de matériau selon l'une quelconque des revendications précédentes, **caractérisé en ce que** ledit au moins un guide (49) pour la préparation d'une bande de matériau (3, 4, 7) à travailler/traiter s'étend au moins entre l'au moins un point de rétraction de bande de matériau et un dispositif de préparation (19, 20).

5. Dispositif de travail/traitement de bande de matériau selon l'une quelconque des revendications précédentes, **caractérisé en ce que**, lors d'une nouvelle introduction d'une bande de matériau (3, 4, 7) dans le dispositif de travail/traitement de bande de matériau, ledit au moins un guide (49) pour guider cette bande de matériau (3, 4, 7) s'étend sensiblement sans interruption d'une entrée à une sortie (44) du dispositif de travail/traitement de bande de matériau.

6. Dispositif de travail/traitement de bande de matériau selon l'une quelconque des revendications précédentes, **caractérisé en ce que** ledit au moins un guide (49) s'étend entre son premier dispositif de liaison (21) et son deuxième dispositif de liaison (22) pour relier une extrémité d'une bande de matériau finie (4, 7) à un début d'une autre bande de matériau finie (7, 4).

7. Dispositif de travail/traitement de bande de matériau selon l'une quelconque des revendications précédentes, **caractérisé en ce que** ledit au moins un guide (49) comprend au moins un dispositif de guidage droit, sensiblement droit et/ou courbé (51, 52, 60, 62, 64, 65, 70, 73, 75, 77).

8. Dispositif de travail/traitement de bande de matériau selon l'une quelconque des revendications précédentes, **caractérisé en ce que** ledit au moins un guide (49) comprend au moins un dispositif de guidage (51, 52, 60, 62, 64, 65, 73, 75, 77) disposé de manière fixe par rapport au dispositif de travail/traitement de bande de matériau.

9. Dispositif de travail/traitement de bande de matériau selon l'une quelconque des revendications précédentes, **caractérisé en ce qu'**un rouleau de matériau (5, 8) portant la bande de matériau (4, 7) à rétracter peut être prélevé de manière automatisée.
